# EUROPEAN PATENT APPLICATION

(11) **EP 1 669 868 A1**
(43) Date of publication of application: **14.06.2006**
(21) Application number: 04747279.0
(22) Date of filing: 09.07.2004
(51) Int. Cl.: G06F 9/54, H03K 19/173, G06F 9/40, G06F 9/38

(54) **PROCESSOR AND INTEGRATED CIRCUIT COMPRISING RECONFIGURABLE CIRCUIT, AND PROCESSING METHOD UTILIZING IT**

(30) Priority: 30.09.2003 JP 2003339030; 22.10.2003 JP 2003362216
(71) Applicant: SANYO ELECTRIC CO., LTD., Moriguchi-shi, Osaka 570-8677 (JP)
(72) Inventor: HIRAMATSU, Tatsuo; c/o SANYO ELECTRIC CO., LTD., Moriguchi-shi, Osaka 5708677 (JP); NAKAJIMA, Hiroshi; c/o SANYO ELECTRIC CO., LTD., Moriguchi-shi, Osaka 5708677 (JP); OKADA, Makoto; c/o SANYO ELECTRIC CO., LTD., Moriguchi-shi, Osaka 5708677 (JP); OZONE, Makoto; c/o SANYO ELECTRIC CO., LTD., Moriguchi-shi, Osaka 5708677 (JP)
(74) Representative: Walaski, Jan Filip
(86) International application number: PCT/JP2004/009811
(87) International publication number: WO 2005/033939

(57) **Abstract**

In the processing device (10) in accordance with the present invention, a plurality of divided circuits obtained by dividing one circuit are successively configured on a reconfigurable circuit (12), an operation is executed by the divided circuits by feeding back an output of one divided circuit to a next divided circuit, and an output is taken out from the last configured divided circuit. As a feedback path, a path portion (24) is formed, which connects the output of the reconfigurable circuit (12) to its input. By successively configuring the divided circuits, one circuit as a whole can be implemented.

## Description

### Technical Field

The present invention relates to integrated circuit technique and, more specifically, to a processing device and integrated circuit device with a reconfigurable circuit, as well as to a technique of processing method utilizing these devices.

### Background Art

In satellite broadcast, by way of example, it is a common practice to switch broadcast mode for image quality adjustment in each season. A receiver has a plurality of hardware circuits corresponding to respective broadcast modes, and the circuits are switched and one is used for reception by a selector in accordance with the broadcast mode, while circuits for other broadcast modes lie idle. When a plurality of dedicated circuits are used switched one after another and the switching interval is relatively long as in the case of mode switching, circuit structure could be made simpler and more versatile and mounting cost could be reduced at the same time if an LSI were reconfigured instantly at the time of switching, rather than forming a plurality of dedicated circuits. In order to meet such a need, a dynamically reconfigurable LSI has been attracting attention of manufacturers. Particularly, an LSI to be mounted on a mobile terminal such as a portable telephone or a PDA (Personal Data Assistant) must be small in size, and therefore, if an LSI could be dynamically reconfigured to appropriately switch functions in accordance with the intended use, packaging area of the LSI could be made smaller.

In this respect, an FPGA (Field Programmable Gate Array) allows relatively free circuit configuration as circuit data can be written after an LSI is manufactured, and hence, it has been used for hardware design. The FPGA includes basic cells consisting of a look-up table (LUT) for storing a truth table of logic circuits and a flip-flop for output, and programmable interconnection resources connecting the basic cells. The FPGA can realize an intended logic operation by writing data to be stored in the LUT and interconnection data. When an LSI is designed using an FPGA, however, packaging area becomes considerably larger than an ASIC (Application Specific IC) design, resulting in higher cost. Thus, a method has been proposed in which the FPGA is dynamically reconfigured to enable re-use of circuit configuration (see, for example, Patent Document 1).
Patent Document 1: Japanese Patent Laying-Open No. 10-256383 (in its entirety, Figs. 1-4)

### Disclosure of the Invention

### Problems to be Solved by the Invention

Though the FPGA has high degree of freedom in designing circuit configuration and hence high versatility, it must include a large number of switches and a control circuit for controlling ON/OFF of the switches to enable connection between every basic cells, and therefore, packaging area for the control circuit unavoidably becomes large. Further, as the basic cells are connected in a complicated interconnection pattern, line length tends to be longer. In addition, in its structure, a large number of switches are connected to one line, causing much delay. Therefore, in most cases, LSIs implemented by FPGA are used only as a prototype or for experiment, and are not suitable for mass production in view of packaging efficiency, performance and cost. Further, in an FPGA, it is necessary to send setting data to a number of LUT-type basic cells, and therefore, it takes considerably long time to configure a circuit. Therefore, the FPGA is not suitable for an application that requires instant switching of circuit configuration.

The present invention was made in view of the foregoing, and its object is to provide a processing device and integrated circuit device with a reconfigurable circuit that contributes to reduction in circuit scale, as well as to provide a processing method utilizing these.

A further object of the present invention is to provide a processing device with a reconfigurable circuit that realizes high speed mapping of an intended circuit.

### Means for Solving the Problems

In order to solve the above-described problems, according to an aspect, the present invention provides a processing device, including: a reconfigurable circuit allowing change in function; a path portion connecting an output of the reconfigurable circuit to an input of the reconfigurable circuit; a setting portion supplying setting data for configuring an intended circuit in the reconfigurable circuit; and a control portion controlling the setting portion such that a plurality of setting data are successively supplied to the reconfigurable circuit, so that an output of a circuit configured on the reconfigurable circuit in accordance with one setting data is supplied to an input of a circuit configured in accordance with next setting data through the first path portion. The first path portion functions as a feedback path between the output and the input of the reconfigurable circuit.

By the processing device in accordance with this aspect, even when the circuit to be configured is of a large scale, the circuit can be divided and configured one after another to a reconfigurable circuit. Therefore, it is unnecessary to set the circuit scale of the reconfigurable circuit dependent on the circuit to be configured, and therefore, the circuit scale of the reconfigurable circuit can be made small. Further, as the circuit scale of the reconfigurable circuit is made small, power consumption can be reduced.

In the processing device of this aspect, the setting portion successively supplies a plurality of setting data to the reconfigurable circuit, whereby one circuit as a whole is configured. The plurality of setting data represent respective ones of the plurality of divided circuits obtained by dividing one circuit.

The reconfigurable circuit is a logic circuit such as a combinational circuit or a sequence circuit. Particularly, when it is implemented as a combinational circuit, once an input data is set, an output can be taken out at high speed, for example, within one clock. The processing device further includes an internal state holding circuit receiving an output of the reconfigurable circuit, and the internal state holding circuit is connected to the first path portion. Further, the processing device includes an output circuit receiving an output of the reconfigurable circuit, and when the setting portion configures the reconfigurable circuit a plurality of times, the output circuit may provide an output from the reconfigurable circuit. After mapping all the divided circuits to the reconfigurable circuit, by taking out an output from the last divided circuit, an intended output can be obtained. The processing device further includes a memory portion and a second path portion, and the second path portion transmits an output of a circuit configured on the reconfigurable circuit stored in a storing portion to an input of a circuit configured based on the next setting data. The control portion is capable of inputting the input data from the memory portion to the reconfigurable circuit as needed, and therefore, parallel processing can be executed. Further, the processing device additionally includes a switching circuit for switching between the input from the second path portion and an external input.

The reconfigurable circuit includes a plurality of logic circuits each being capable of selectively executing a plurality of operating functions, and a connecting portion capable of setting connection relation among the logic circuits, and the setting portion may set the function and connection relation of the logic circuits. The reconfigurable circuit may include a multi-stage arrangement of logic circuits and a connecting portion capable of setting connecting relation between an output of a logic circuit of a preceding stage to an input of a logic circuit of a succeeding stage. The multi-stage arrangement of logic circuits may have such a structure that logic circuits arranged in lateral direction form a row, and a plurality of such rows are combined as stages along the longitudinal direction, a connecting line is not provided between the logic circuits along the lateral direction, that is, in the row, while a connecting line is provided between an output of the row of logic circuits of each stage and an input of the row of logic circuits of the immediately succeeding stage.

Each logic circuit may be a circuit that is capable of operation of relatively high performance, and, by way of example, it may be an arithmetic logic unit (ALU) that can selectively execute a plurality of different multi-bit operations. The logic circuit has a selector for selecting among a plurality of operation functions, and the selector selects an operation function in accordance with setting data loaded from the outside. As the operation function of the logic circuit can be selected by a selector, functions of the logic circuit can be switched instantly, and hence, functions of the reconfigurable circuit can be set instantly.

According to another aspect, the present invention provides a processing method, including the steps of: configuring a plurality of divided circuits obtained by dividing one circuit on a reconfigurable circuit; feeding back an output of one divided circuit to an input of a next divided circuit to execute an operation in the divided circuits; and taking out an output from the last configured divided circuit. By the processing method according to this aspect, even when the circuit to be configured is of a large scale, the circuit can be divided and configured one after another on a reconfigurable circuit. Therefore, it is unnecessary to set the circuit scale of the reconfigurable circuit dependent on the circuit to be configured, and therefore, the circuit scale of the reconfigurable circuit can be made small.

According to a still further aspect, the present invention provides an integrated circuit device, including: a reconfigurable circuit allowing change in function; a path portion connecting an output of the reconfigurable circuit to an input of the reconfigurable circuit; and a setting portion supplying setting data for configuring an intended circuit on the reconfigurable circuit. In the integrated circuit device in accordance with this aspect, the reconfigurable circuit, the path portion and the setting portion are formed on one chip, and therefore, high speed processing becomes possible.

According to a still further aspect, the present invention provides a processing device, including: a reconfigurable circuit allowing change in function and connection relation; a setting portion storing setting data representing a divided unit forming a part of an intended circuit and supplying the setting data to the reconfigurable circuit; and a control portion controlling the setting portion such that a plurality of setting data are successively supplied to the reconfigurable circuit to configure the intended circuit; wherein the reconfigurable circuit has at least one state holding circuit holding an internal state; the reconfigurable circuit is divided, by an arrangement of the state holding circuit, into a plurality of stages of reconfigurable units; and the control portion controls the setting portion such that when a plurality of intended circuits are to be configured, setting data for configuring divided units each forming a part of the circuits on respective ones of the plurality of stages of reconfigurable units are successively supplied along a process flow. In the processing device in accordance with this aspect, when a plurality of intended circuits are to be configured, setting data for configuring a divided unit forming a part of each circuit is supplied to a plurality of stages of reconfigurable units, and therefore, divided units configuring separate circuits in respective stages are formed as reconfigurable units. Thus, parallel processing is executed, and high-speed configuration of an intended circuit, that is, intended logic operation, can be realized.

It is noted that arbitrary combination of the components described above, and representation of the present invention in the form of a method, device, system, or a computer program are effective manner of implementing the present invention.

### Effects of the Invention

According to the present invention, a processing device and an integrated circuit device with a reconfigurable circuit that contributes to reduction in circuit scale, as well as a processing method utilizing these can be provided.

Further, according to the present invention, a processing device with a reconfigurable circuit realizing high speed mapping of an intended circuit can be provided.

### Brief Description of the Drawings

Fig. 1 shows a configuration of a processing apparatus 10 in accordance with an embodiment.
Fig. 2 is an illustration showing setting data 40 for a plurality of circuits obtained by dividing one circuit 42.
Fig. 3 shows a configuration of a reconfigurable circuit 12.
Fig. 4 shows a configuration of another reconfigurable circuit 12#.
Fig. 5 shows an example of a data flow graph 38.
Fig. 6 is a flow chart of signal processing in accordance with an embodiment.
Fig. 7 shows a 7-tap FIR filter circuit using preceding and succeeding 7 points.
Fig. 8 shows a circuit converted from the FIR filter circuit shown in Fig. 7.
Fig. 9 is a circuit obtained by further converting the FIR filter circuit shown in Fig. 8.
Fig. 10 is a data flow graph 38a formed by compiling the FIR filter circuit shown in Fig. 9.
Fig. 11 shows a reconfigurable circuit 12 used in an embodiment.
Fig. 12 shows an example in which the data flow graph 38a shown in Fig. 10 is realized by using reconfigurable circuit 12 of Fig. 11.
Fig. 13 shows data flow graph 38b formed by compiling the FIR filter circuit shown in Fig. 8.
Fig. 14 shows an example in which the data flow graph 38b shown in Fig. 13 is realized by using reconfigurable circuit 12 of Fig. 11.
Fig. 15 shows a configuration of a processing device 10a in accordance with Embodiment 3 of the present invention.
Fig. 16 shows a configuration of a digital demodulating circuit group configured by using the reconfigurable circuit in accordance with Embodiment 3 of the present invention.
Fig. 17 is an illustration schematically showing a configuration of demodulating circuit 54.
Fig. 18 shows a loop filter 56.
Fig. 19 is a data flow graph 38c formed by compiling the demodulating circuit 54 shown in Fig. 17.
Fig. 20 shows a flow of processing when the digital demodulating circuit group in accordance with Embodiment 3 of the present invention are mapped to the reconfigurable circuit.
Fig. 21 shows an example in which the data flow graph 38c shown in Fig. 19 is realized by using reconfigurable circuit 12 of Fig. 11.
Fig. 22 is an illustration showing that divided circuits A# to D# are formed by a plurality of divided units.
Fig. 23 shows an example in which divided circuit A# is configured by selector 16 providing an input to reconfigurable circuit 12 based on the set data.
Fig. 24 is an illustration showing process flow in divided circuit A# configured by reconfigurable circuit 12.
Fig. 25 shows a configuration of a processing device 10# in accordance with Embodiment 4 of the present invention.
Fig. 26 shows a configuration of reconfigurable circuit 12#a.
Fig. 27 shows a configuration of reconfigurable circuit 12#b that can replace configurable circuit 12#a of Fig. 26.
Fig. 28 shows an exemplary circuit group to be mapped to reconfigurable circuit 12#a in accordance with Embodiment 4 of the present invention.
Fig. 29A is an illustration showing divided units divided for mapping a circuit FA to each of the reconfigurable units of reconfigurable circuit 12#a.
Fig. 29B is an illustration showing divided units divided for mapping a circuit FB to each of the reconfigurable units of reconfigurable circuit 12#a.
Fig. 29C is an illustration showing divided units divided for mapping a circuit FC to each of the reconfigurable units of reconfigurable circuit 12#a.
Fig. 30 is an illustration showing a method of mapping circuits FA to FC to reconfigurable circuit 12#a in accordance with an embodiment of the present invention.
Fig. 31 is an illustration showing a storage area in which a plurality of setting data of divided units are stored, in storing portion 34.
Fig. 32 illustrates a method how control portion 18 transmits setting data from the setting data 40 of storing portion 34 to the first circuit setting portion 15a, second circuit setting portion 15b and third circuit setting portion 15c by address designation.
Fig. 33 shows another exemplary circuit group to be mapped to reconfigurable circuit 12#a in accordance with the embodiment.
Fig. 34A is an illustration showing divided units divided for mapping a circuit FA to each of the reconfigurable units of reconfigurable circuit 12#a.
Fig. 34B is an illustration showing divided units divided for mapping a circuit FB to each of the reconfigurable units of reconfigurable circuit 12#a.
Fig. 34C is an illustration showing divided units divided for mapping a circuit FD to each of the reconfigurable units of reconfigurable circuit 12#a.
Fig. 34D is an illustration showing divided units divided for mapping a circuit FE to each of the reconfigurable units of reconfigurable circuit 12#a.
Fig. 35 is an illustration showing a method of mapping circuits FA, FB, FD and FE to reconfigurable circuit 12#a in accordance with Embodiment 4 of the present invention.
Fig. 36A illustrates divided units obtained by dividing an FIR filter 50.
Fig. 36B illustrates divided units obtained by dividing an FIR filter 52.
Fig. 36C illustrates divided units obtained by dividing a demodulating circuit 54.
Fig. 37 is an illustration showing mapping of a digital demodulating circuit group to reconfigurable circuit 12#a in accordance with the same method as shown in Fig. 30.

### Description of the Reference Signs

10, 10a, 10# processing device; 12, 12#, 12#a, 12#b reconfigurable circuit; 14, 14# setting portion; 14a first setting portion; 14b second setting portion; 14c third setting portion; 14d fourth setting portion; 15a first circuit setting portion; 15b second circuit setting portion; 15c third circuit setting portion; 16 selector; 16# circuit processing control portion; 18 control portion; 20 internal state holding circuit; 22 output circuit; 24, 29 path portion; 26, 26a, 26# integrated circuit device; 27 memory portion; 28 switching circuit; 30 compiling portion; 32 setting data generating portion; 34 storing portion; 36 program; 38, 38a, 38b, 38c data flow graph; 40 setting data; 50 logic circuit; 52, 52# connecting portion; 52#a, 52#b connecting portion + FF circuit.

### Best Modes for Carrying Out the Invention

In the following, best modes of the present invention will be described in detail with reference to the figures. In the figures, the same reference characters denote the same or corresponding portions.

### (Embodiment 1)

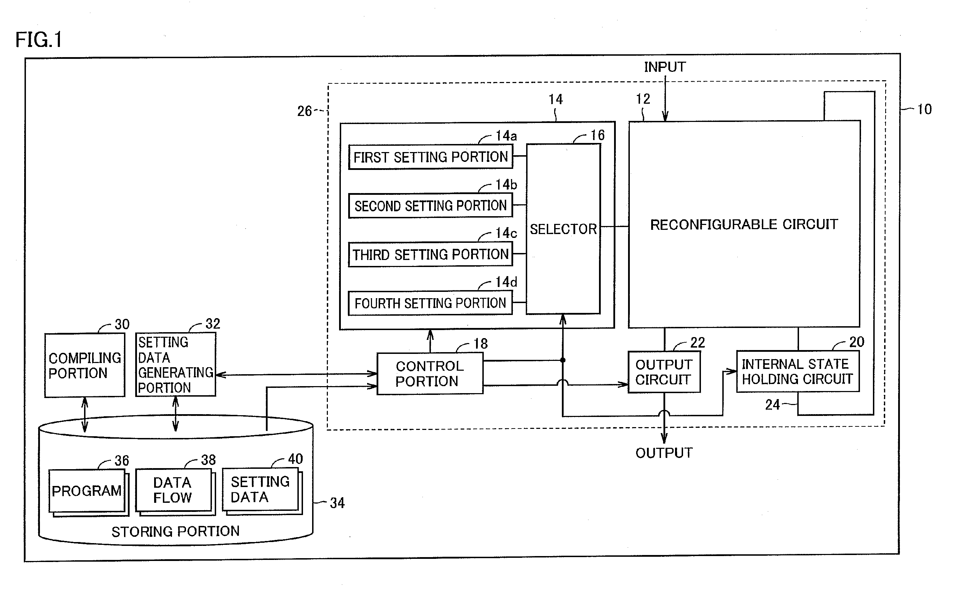

Fig. 1 shows a configuration of a processing device 10 in accordance with an embodiment. Processing device 10 includes an integrated circuit device 26. Integrated circuit device 26 has a function that allows reconfiguration of circuit structure. Integrated circuit device 26 is formed as one chip, and includes a reconfigurable circuit 12, a setting portion 14, a control portion 18, an internal state holding circuit 20, an output circuit 22 and a path portion 24. Reconfigurable circuit 12 allows change in function, by changing settings.

Setting portion 14 includes first setting portion 14a, second setting portion 14b, third setting portion 14c and fourth setting portion 14d and a selector 16, and supplies setting data 40 for forming an intended circuit to reconfigurable circuit 12.

Path portion 24 functions as a feedback path, and connects an output of reconfigurable circuit 12 to an input of reconfigurable circuit 12. Internal state holding circuit 20 and output circuit 22 are formed, by way of example, as sequence circuits such as a data flip-flop (D-FF), and receive an output of reconfigurable circuit 12. Internal state holding circuit 20 is connected to path portion 24. Reconfigurable circuit 12 is formed as a logic circuit such as a combinational circuit or sequence circuit.

Reconfigurable circuit 12 is formed to have logic circuits of which functions can be changed. Specifically, it has such a structure that includes a plurality of logic circuit stages capable of selectively executing a plurality of operating functions, and includes a connecting portion of which connecting relation between an output of a preceding stage and an input of a succeeding stage can be set. The plurality of logic circuits are arranged in a matrix. The function of each logic circuit and the connecting relation between the logic circuits are set by setting data 40 supplied from setting portion 14. The setting data 40 is generated in the following manner.

A program 36 to be realized by integrated circuit device 26 is held by storing portion 34. Program 36 includes description of a signal processing circuit, a signal processing algorithm or the like written in a high level language such as C. Compiling portion 30 compiles program 36 stored in storing portion 34, converts the same to a data flow graph 38, and stores the graph in storing portion 34. Data flow graph 38 is a graphic representation of operation flow of input variables and constants.

Setting data generating portion 32 generates setting data 40 from data flow graph 38. Setting data 40 is for mapping data flow graph 38 to reconfigurable circuit 12, and determines functions of logic circuits in reconfigurable circuit 12 and connecting relation between logic circuits. In the present embodiment, setting data generating portion 32 generates setting data 40 for a plurality of circuits provided by dividing one circuit.

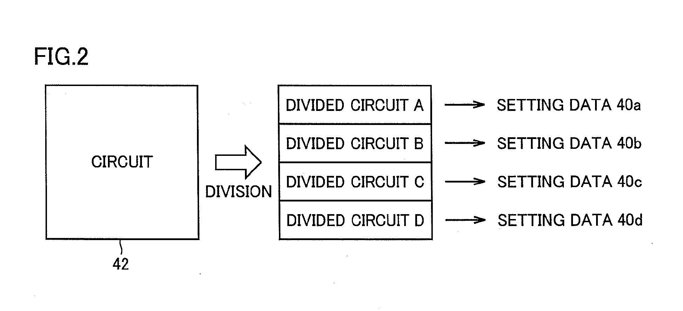

Fig. 2 is an illustration showing setting data 40 for the plurality of circuits obtained by dividing one circuit 42. A circuit obtained by dividing one circuit 42 will be referred to as a "divided circuit." In this example, one circuit 42 is divided into four divided circuits, that is, divided circuits A, B, C and D. Circuit 42 is divided in accordance with the operation flow of data flow graph 38. In data flow graph 38, when an operation flow from top to bottom is represented, the data flow graph 38 is cut from the top at a prescribed interval, and a cut portion is set as a divided circuit. The interval of cutting along the flow is determined to be not larger than the number of stages of logic circuits in reconfigurable circuit 12. Circuit 42 may be divided along the lateral direction of data flow graph 38. The width of cutting along the lateral direction is determined to be not larger than the number of logic circuits per one stage in reconfigurable circuit 12.

When the circuit to be generated is larger than reconfigurable circuit 12, it is preferable that setting data generating portion 32 divides circuit 42 such that the circuit comes to have such a size that can be mapped to reconfigurable circuit 12. Setting data generating portion 32 determines the method of dividing circuit 42 in accordance with the arrangement of logic circuits in reconfigurable circuit 12 and the data flow graph 38. The arrangement of reconfigurable circuit 12 may be transmitted to control portion 18 to setting data generating portion 32, or may be stored in storing portion 34 beforehand. Alternatively, control portion 18 may instruct the method of dividing circuit 42 to setting data generating portion 32.

By executing the above-described procedure, storing portion 34 stores a plurality of setting data 40 for configuring reconfigurable circuit 12 as an intended circuit. The plurality of setting data 40 include setting data 40a for configuring divided circuit A, setting data 40b for configuring divided circuit B, setting data 40c for configuring divided circuit C, and setting data 40d for configuring divided circuit D. As already described, the plurality of setting data 40 represent respective ones of the plurality of divided circuits obtained by dividing one circuit 42. In this manner, by generating setting data 40 for the circuit 42 to be generated, in accordance with the circuit scale of reconfigurable circuit 12, a processing device having high versatility can be realized. From a different viewpoint, the processing device 10 of the present embodiment enables reconfiguration of a desired circuit using reconfigurable circuit 12 of small circuit scale.

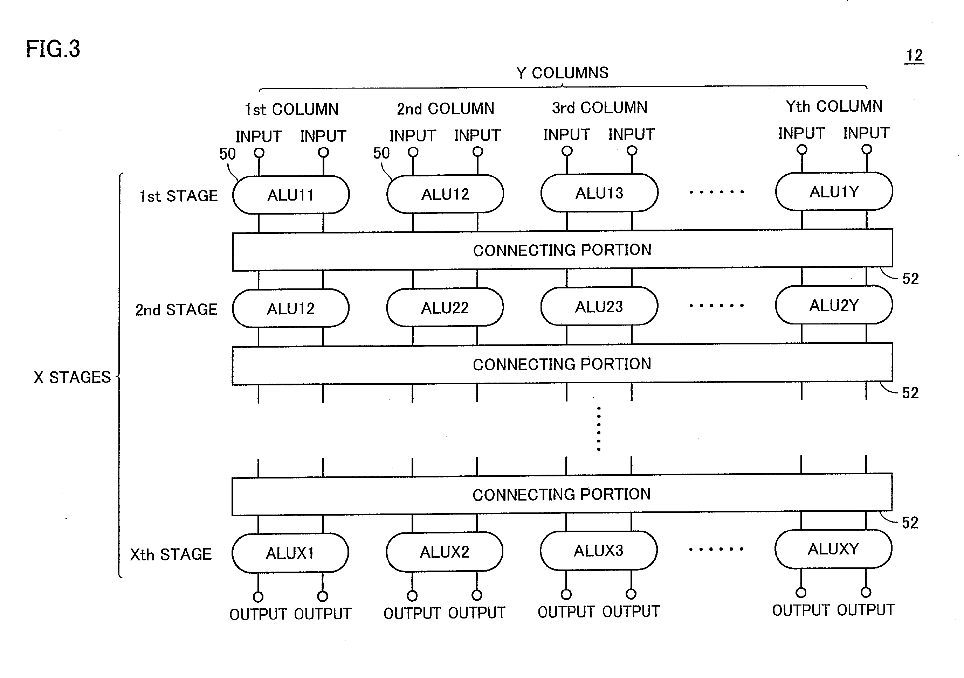

Fig. 3 shows a configuration of reconfigurable circuit 12. Reconfigurable circuit 12 includes a plurality of rows of logic circuits 50 arranged in a plurality of stages. By a connecting portion 52 provided for each stage, an output of the row of logic circuits in a preceding stage may be arbitrarily connected to an input of a row of logic circuits in a succeeding stage. Here, an ALU is shown as an example of logic circuit 50. Each ALU can selectively execute, by setting, a plurality of different multi-bit operations such as OR, AND and bit shift. Each ALU has a selector for selecting among the plurality of operational functions.

As shown in the figure, reconfigurable circuit 12 is formed as an ALU array having Y ALUs in the lateral direction and X ALUs in the longitudinal direction. To ALUs ALU11, ALU12, ... ALU1Y of the first stage, an input variable or a constant is input, and a prescribed set operation is performed. An output of the operation result is input to the ALUs of the second stage, that is, ALU21, ALU22, ... ALU2Y, in accordance with the connection set in connecting portion 52 of the first stage. In connecting portion 52 of the first stage, interconnection lines are formed to enable an arbitrary connecting relation or a connecting relation selected from determined combinations between an output of the ALU row of the first stage and an input of the ALU row of the second stage, and by the setting, an intended interconnection line is made effective. Then, to the connecting portion 52 of the (X-1)th stage, similar configuration continues, and the ALU row of the Xth stage as the last stage provides the final result of operation.

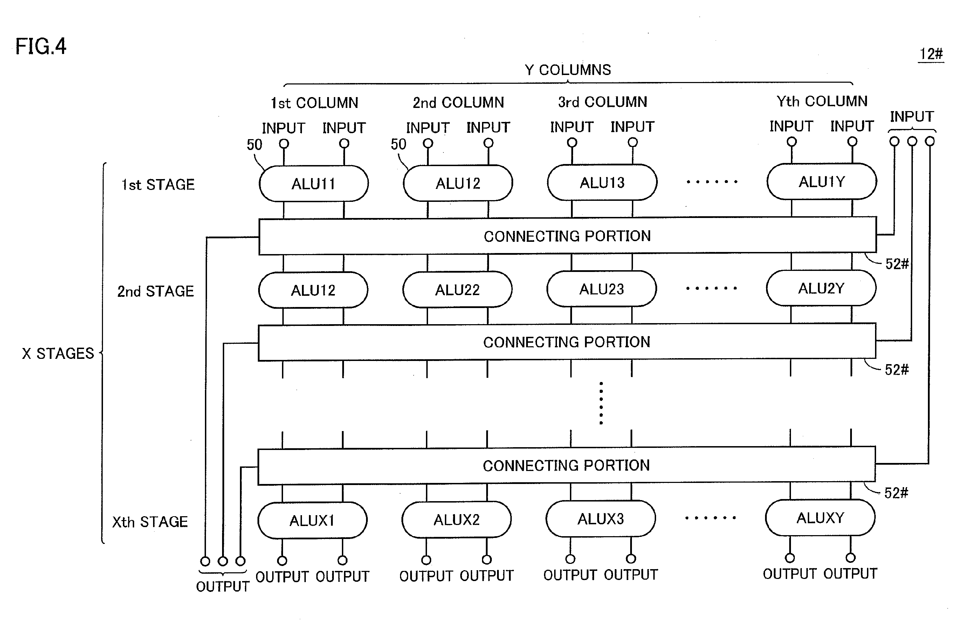

Fig. 4 shows a configuration of another reconfigurable circuit 12#.

Referring to Fig. 4, reconfigurable circuit 12# is different from reconfigurable circuit 12 in that connecting portion 52 is replaced by a connecting portion 52#. Connecting portion 52# has such a configuration that allows direct external input of input variables or constants in addition to the function of connecting portion 52, and further allows direct output of the result of operation by the ALUs of the preceding stage to the outside.

Because of this configuration, it becomes possible to form wider variety of combinational circuits than the configuration of reconfigurable circuit 12 shown in Fig. 3, and the degree of freedom in design improves. Other portions and configuration are the same as those of reconfigurable circuit 12 shown in Fig. 3, and therefore, detailed description thereof will not be repeated.

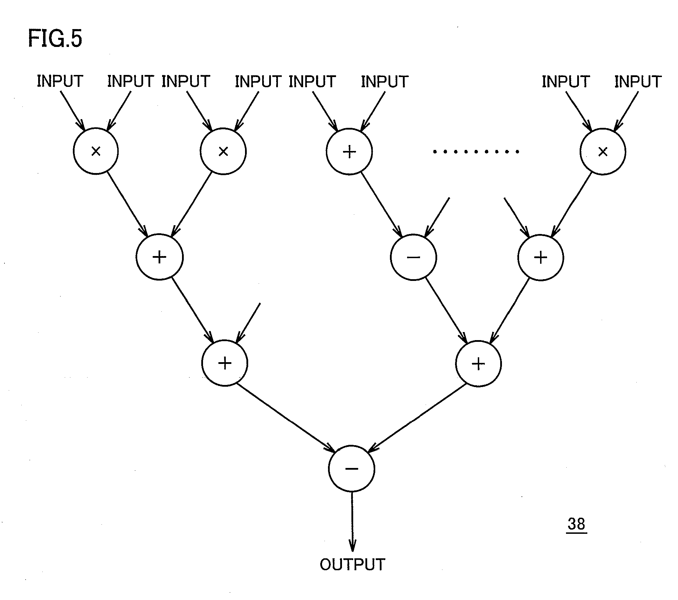

Fig. 5 shows an example of data flow graph 38. In data flow graph 38, a flow of operation on input variables and constants is shown stepwise in the form of a graph. In the figure, a circle represents an operator. Setting data generating portion 32 generates setting data for mapping to reconfigurable circuit 12, using data flow graph 38. In the present embodiment, particularly when the data flow graph 38 is too large to be mapped to reconfigurable circuit 12, data flow graph 38 is divided into a plurality of areas, so as to generate setting data 40 for the divided circuits. In order to realize the flow of operation represented by data flow graph 38 on circuits, setting data 40 is prepared as data specifying logic circuits to which operation functions are allocated, determining connecting relation between logic circuits and defining input variables and input constants. Therefore, setting data 40 is formed to include selecting information to be supplied to the selector selecting the function of each logic circuit 50, connecting information setting interconnection of connecting portion 52, necessary variable data and constant data, and so on.

Returning to Fig. 1, when a circuit is configured, control portion 18 selects a plurality of setting data 40 for configuring one circuit. Here, it is assumed that control portion 18 selects setting data 40 for configuring circuit 42 shown in Fig. 2, that is, setting data 40a for divided circuit A, setting data 40b for divided circuit B, setting data 40c for divided circuit C, and setting data 40d for divided circuit D. Control portion 18 supplies the selected setting data 40 to setting portion 14. Setting portion 14 has a cache memory and other types of memory, for holding supplied setting data 40 respectively. Specifically, control portion 18 supplies setting data 40a in a first setting portion 14a, setting data 40b in a second setting portion 14b, setting data 40c in a third setting portion 14c, and setting data 40d in a fourth setting portion 14d. In the present example, a configuration will be described in which control portion 18 receives setting data 40 from storing portion 34 and supplies to setting portion 14. Alternatively, setting portion 14 may be adapted to have a memory such as an RAM (Random Access Memory) or an ROM (Read Only Memory) for storing setting data and control data for controlling various circuits, without providing control portion 18.

Setting portion 14 sets the selected setting data 40 to reconfigurable circuit 12, and reconfigures the circuits in reconfigurable circuit 12. Consequently, it becomes possible for reconfigurable circuit 12 to execute an intended operation. Reconfigurable circuit 12 uses, as basic cells, ALUs having high performance operation capability, and reconfigurable circuit 12 and setting portion 14 are configured (mapped) on one chip. Therefore, a configuration can be realized at high speed, for example, within one clock. Control portion 18 has a clock function, and a clock signal is supplied to internal state holding circuit 20 and output circuit 22. Further, control portion 18 may include a counter circuit, and may supply a count signal to selector 16. Here, the counter circuit is a quaternary counter.

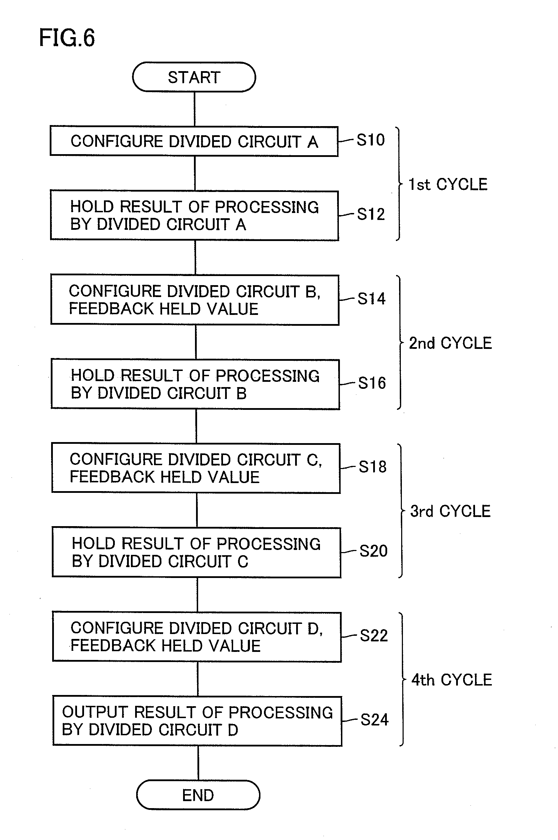

Fig. 6 is a flow chart of signal processing in accordance with the present embodiment. Control portion 18 controls setting portion 14 such that in response to the counter circuit, setting portion 14 supplies a plurality of setting data 40, that is, setting data 40a, 40b, 40c and 40d successively to reconfigurable circuit 12. As the setting data successively supplies the plurality of setting data 40 to reconfigurable circuit 12, a circuit as a whole is formed. Output circuit 22 provides an output from reconfigurable circuit 12 when the reconfigurable circuit 12 is configured a plurality of times, here, four times, by the setting portion 14. The number corresponds to the number of setting data 40 used. In the following, specific procedure will be described.

First, control portion 18 controls selector 16 and selects first setting portion 14a. Selector 16 may be controlled by a counter circuit. First setting portion 14a supplies setting data 40a of divided circuit A to reconfigurable circuit 12, and forms divided circuit A on reconfigurable circuit 12 (step S10). Simultaneously with the configuration of divided circuit A, input data is supplied to divided circuit A. Divided circuit A, which is a combinational circuit, executes an operation before the next clock.

When control portion 18 supplies the clock signal to internal state holding circuit 20, internal state holding circuit 20 holds the result of processing by divided circuit A (step S12). Steps S10 and S12 are generally referred to as the first cycle. At the same time, control portion 18 controls selector 16 to select the second setting portion 14b. Second setting portion 14b supplies setting data 40b of divided circuit B to reconfigurable circuit 12, and forms divided circuit B on reconfigurable circuit 12. At this time, the result of processing by divided circuit A held in internal state holding circuit 20 is supplied to an input of divided circuit B through path portion 24 (step S14). Divided circuit B executes an operation before the next clock.

When control portion 18 supplies the next clock to internal state holding circuit 20, internal state holding circuit 20 holds the result of processing by divided circuit B (step S16). Steps S14 and S16 are generally referred to as the second cycle. At the same time, control portion 18 controls selector 16 to select the third setting portion 14c. Third setting portion 14c supplies setting data 40c of divided circuit C to reconfigurable circuit 12, and forms divided circuit C on reconfigurable circuit 12. At this time, the result of processing by divided circuit B held in internal state holding circuit 20 is supplied to an input of divided circuit C through path portion 24 (step S18). Divided circuit C executes an operation before the next clock.

When control portion 18 supplies the next clock to internal state holding circuit 20, internal state holding circuit 20 holds the result of processing by divided circuit C (step S20). Steps S18 and S20 are generally referred to as the third cycle. At the same time, control portion 18 controls selector 16 to select the fourth setting portion 14d. Fourth setting portion 14d supplies setting data 40d of divided circuit D to reconfigurable circuit 12, and forms divided circuit D on reconfigurable circuit 12. At this time, the result of processing by divided circuit C held in internal state holding circuit 20 is supplied to an input of divided circuit D through path portion 24 (step S22). Divided circuit D executes an operation before the next clock.

When control portion 18 supplies the next clock to output circuit 22, output circuit 22 outputs the result of processing by divided circuit D (step S24). Steps S22 and S24 are referred to as the fourth cycle. When the processes of the first to fourth cycles are to be repeated, control portion 18 again controls selector 16 to select the first setting portion 14a, divided circuit A is configured on reconfigurable circuit 12 and the input data is supplied.

As described above, a plurality of divided circuits A to D obtained by dividing one circuit 42 are successively formed on reconfigurable circuit 12, an output of each divided circuit is fed back to an input of the next divided circuit to execute an operation in each divided circuit, and an output of circuit 42 is taken out from the last configured divided circuit D. The time from step S10 to step S24 corresponds to four cycles, and by the processing device 10 in accordance with the present embodiment, an efficient operation can be executed in a limited circuit scale of reconfigurable circuit 12. Further, as the circuit scale of reconfigurable circuit 12 is small, power consumption can be reduced.

Control circuit 18 may supply the same clock signal to internal state holding circuit 20 and output circuit 22. Alternatively, the clock signal to be supplied to output circuit 22 may have a period four times that of the clock signal supplied to internal state holding circuit 20. When the same clock signal is to be supplied to internal state holding circuit 20 and output circuit 22, internal circuit 20 may also play the role of output circuit 22, so that the two circuits can be integrated to one. In that case, a circuit for taking out a necessary signal becomes necessary in a circuit as a destination of the output or a circuit in the succeeding destination circuit. In the example shown in Fig. 6, one circuit 42 is represented by divided circuits of four cycles, and therefore, the operation period of output circuit 22 is four times the operation period of internal state holding circuit 20. The ratio of periods varies dependent on the number of division of circuit 42. In this example, four setting portions, that is, first to fourth setting portions 14a to 14d are used, and as will be readily understood by a person skilled in the art, the number of setting portions also vary dependent on the number of division of circuit 42.

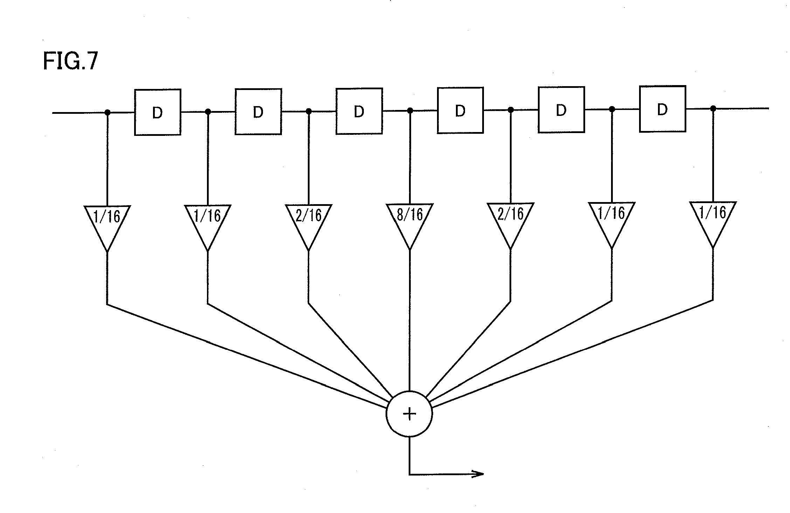

Fig. 7 represents a 7-tap FIR filter circuit using preceding and succeeding seven points. In the following, an example in which the FIR (Finite Impulse Response) filter circuit is implemented by processing device 10 of the present embodiment will be described. Coefficients of the FIR filter circuit are set in symmetry, as shown in the figure.

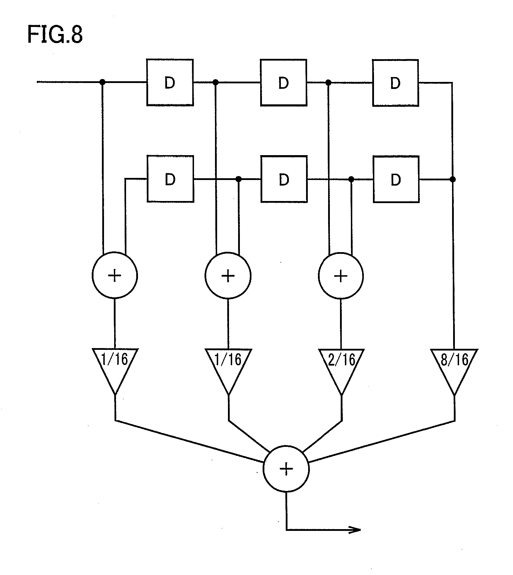

Fig. 8 shows an example in which the FIR filter shown in Fig. 7 is converted. Circuit conversion is done utilizing the symmetric nature of the filter coefficients.

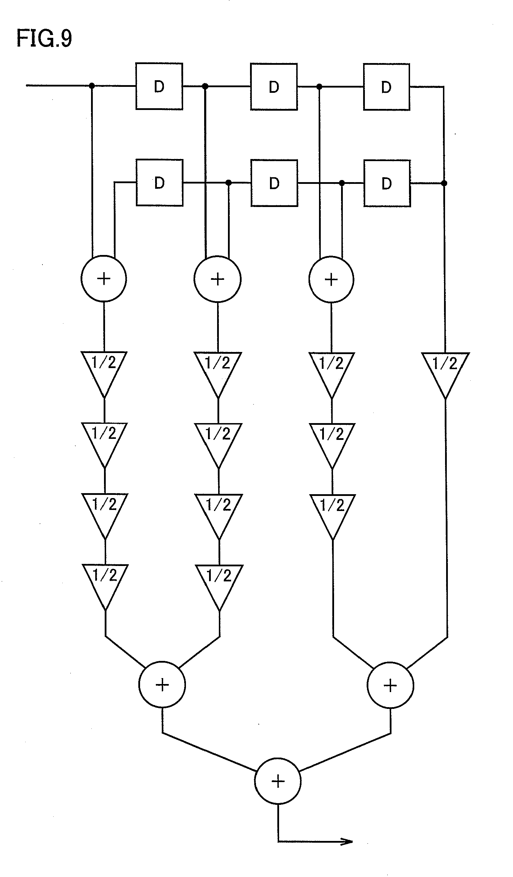

Fig. 9 shows an example in which the FIR filter shown in Fig. 8 is further converted. Here, conversion is done focusing on the filter coefficients. Specifically, coefficient 1/16 is converted to 1/2 × 1/2 × 1/2 × 1/2, 2/16 is converted to 1/2 × 1/2 × 1/2, and 8/16 is converted to 1/2. Operation of a coefficient 1/2 can be realized by 1-bit right shift of data. A 1-bit shifter can be formed in a very small space in the ALU, as compared with a multi-bit shifter.

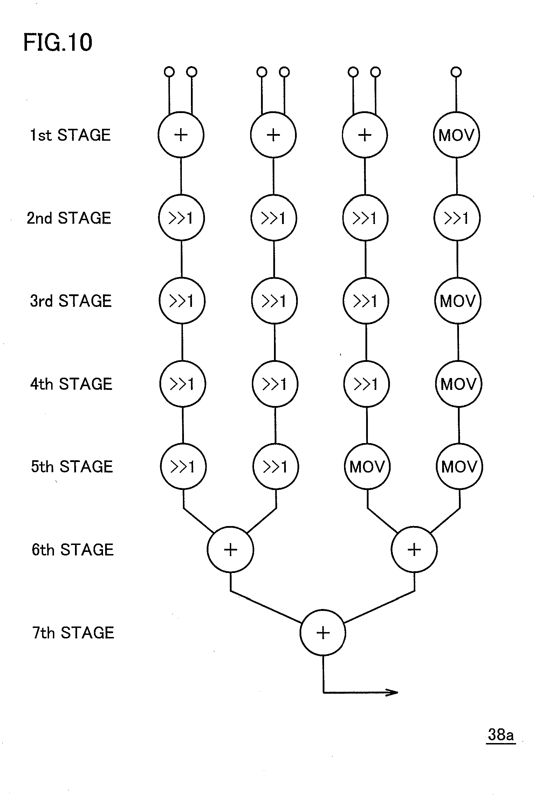

Fig. 10 shows a data flow graph 38a formed by compiling the FIR filter circuit shown in Fig. 9. In the figure, "+" represents addition, ">>1" represents 1-bit shift, and "MOV" represents a through path. As can be seen from the figure, data flow graph 38a consists of seven stages of operators.

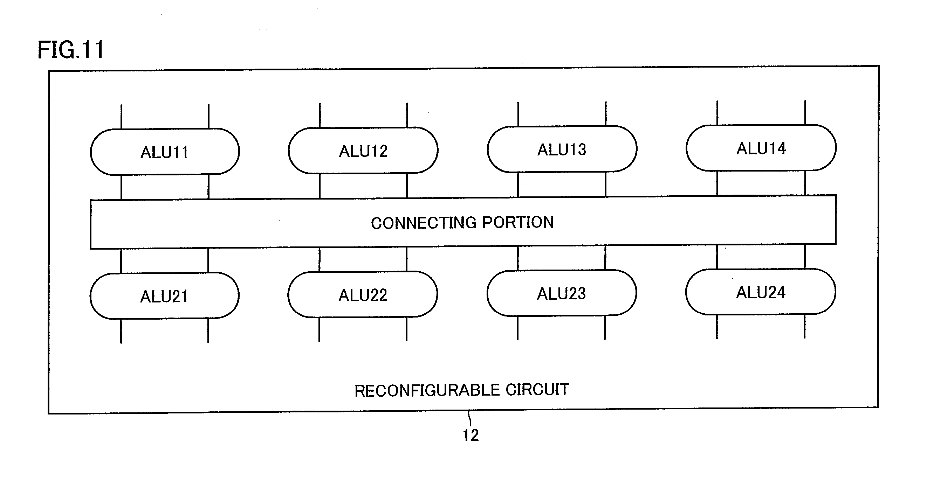

Fig. 11 shows reconfigurable circuit 12 used in the present embodiment. In this example, reconfigurable circuit 12 is formed including ALUs in four rows and two stages.

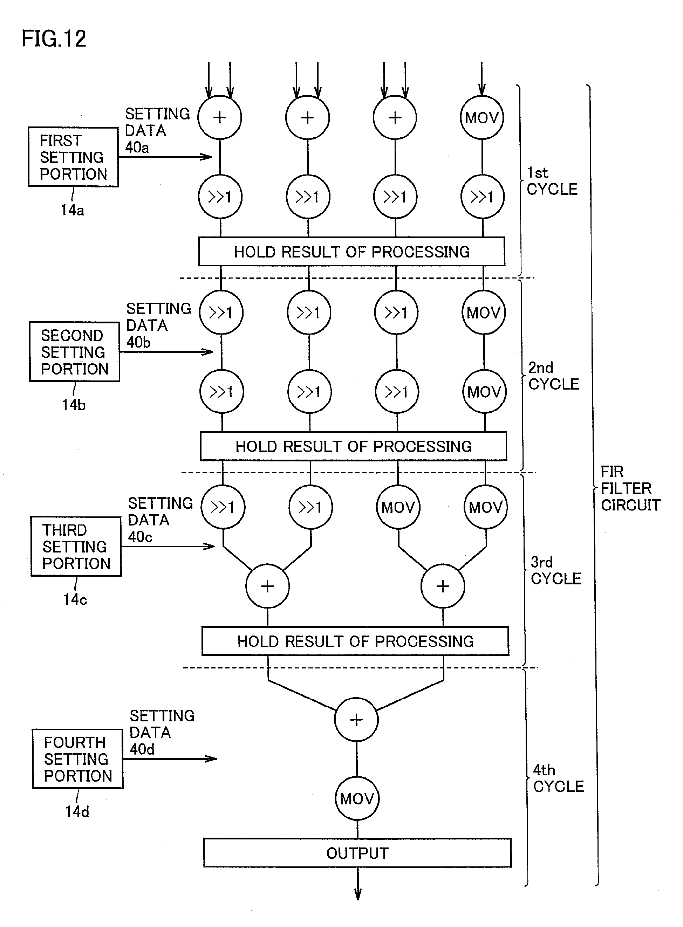

Fig. 12 shows an example in which data flow graph 38a shown in Fig. 10 is realized by using reconfigurable circuit 12 of Fig. 11. The data flow graph 38a consists of seven stages while reconfigurable circuit 12 consists of two stages, and therefore, data flow graph 38a is divided into four.

In the first cycle, first setting portion 14a configures the contents of the first and second stages of data flow graph 38a on reconfigurable circuit 12 by setting data 40a. In the second cycle, second setting portion 14b configures (maps) the contents of the third and fourth stages of data flow graph 38a on reconfigurable circuit 12 by setting data 40b. In the third cycle, third setting portion 14c configures (maps) the contents of the fifth and sixth stages of data flow graph 38a on reconfigurable circuit 12 by setting data 40c. In the fourth cycle, fourth setting portion 14d configures (maps) the contents of the seventh stage of data flow graph 38a on reconfigurable circuit 12 by setting data 40d. The output result of each cycle is fed back as an input to the next cycle.

Embodiment 1 can be realized by only three types of ALU, that is, "+", ">>1" and "MOV". As shifting of a plurality of bits is represented by using a 1-bit shifter a plurality of times, functions required of the ALU can significantly be reduced. Thus, circuit scale of reconfigurable circuit 12 can be reduced. As four setting data 40 are supplied, the counter circuit of control portion 18 is a quaternary counter.

### (Embodiment 2)

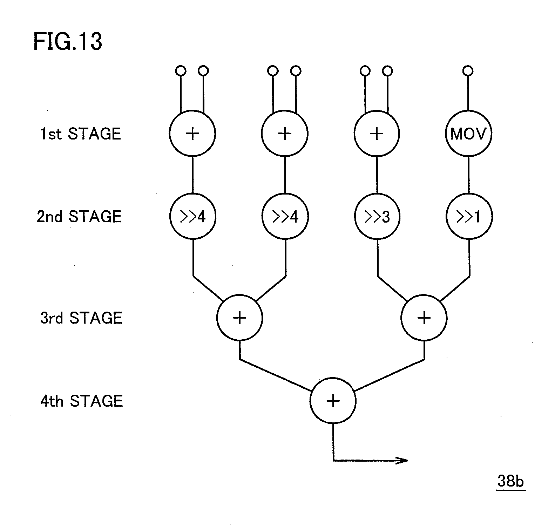

Fig. 13 shows a data flow graph 38b formed by compiling the FIR filter shown in Fig. 8. In the figure, "+" represents addition, "MOV" represents a through path, ">>4" represents 4-bit shift, ">>3" represents 3-bit shift, and ">>1" represents 1-bit shift. In the example shown in Fig. 9, shining of a plurality of bits is changed to 1-bit shift to form data flow graph 38a, while in the example of Fig. 13, shifting of a plurality ofbits are left as it is to form data flow graph 38b. As can be seen from the figure, data flow graph 38b consists of four stages of operators.

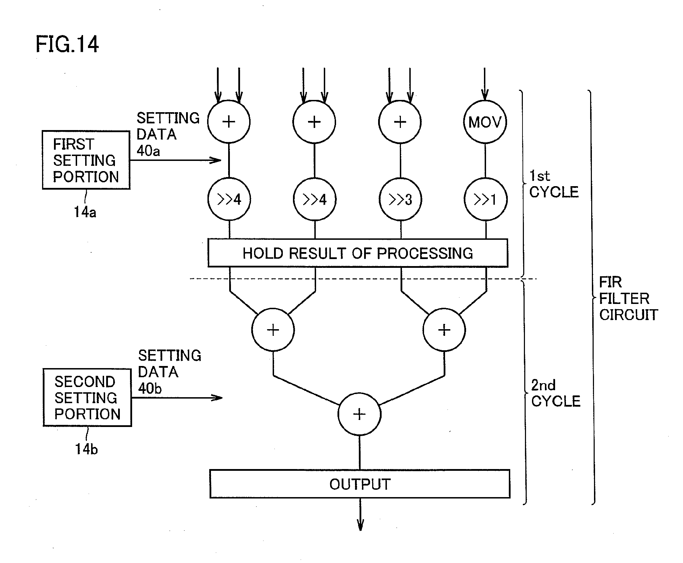

Fig. 14 shows an example in which data flow graph 38b shown in Fig. 13 is realized by using reconfigurable circuit 12 of Fig. 11. The data flow graph 38b consists of four stages while reconfigurable circuit 12 consists of two stages, and therefore, data flow graph 38b is divided into two.

In the first cycle, first setting portion 14a configures (maps) the contents of the first and second stages of data flow graph 38b on reconfigurable circuit 12 by setting data 40a. In the second cycle, second setting portion 14b configures (maps) the contents of the third and fourth stages of data flow graph 38b on reconfigurable circuit 12 by setting data 40b. The output result of the first cycle is fed back as an input to the next, second cycle.

Embodiment 2 can be realized by five types of ALUs, that is, "+", ">>4", ">>3", ">>1" and "MOV". As compared with Embodiment 1, necessary functions of the ALU increases. The number of setting portions used, however, is reduced to two. As two setting data 40 are supplied, the counter circuit of control portion 18 is a binary counter. Further, the operation period of output circuit 22 is twice that of internal state holding circuit 20.

### (Embodiment 3)

In Embodiments 1 and 2 above, examples in which an FIR circuit, which is a single circuit, is implemented by using the reconfigurable circuit have been described. In Embodiment 3, a method of realizing a plurality of circuits by using the reconfigurable circuit will be described.

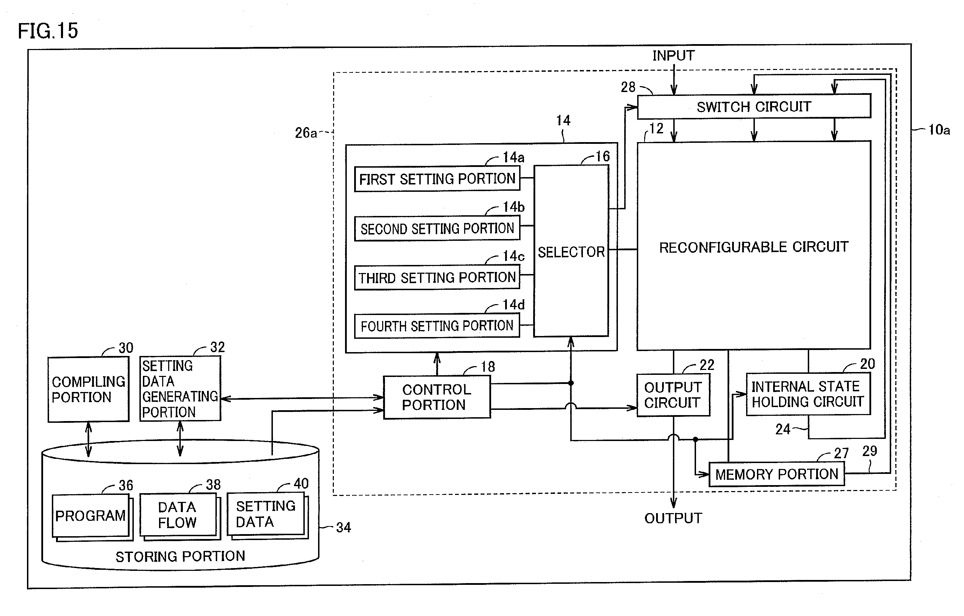

Fig. 15 shows a configuration of processing device 10a in accordance with Embodiment 3.

Referring to Fig. 15, processing device 10a in accordance with Embodiment 3 differs from processing device 10 in accordance with Embodiment 1 in that integrated circuit device 26 is replaced by integrated circuit device 26a. Integrated circuit device 26a differs from integrated circuit device 26 shown in Fig. 1 in that it includes a memory portion 27, a switching circuit 28 and a path portion 29.

Memory portion 27 is a storage area for storing a data signal output from reconfigurable circuit 12 based on an instruction from control portion 18. Further, the data signal stored based on the instruction from control portion 18 is transmitted as an input to reconfigurable circuit 12, through path portion 29. Though there are two path portions 24 and 29 as inputs to reconfigurable circuit 12, path portion 24 does not pass through memory portion 27, and therefore, high-speed feedback process is possible. Particularly, when memory portion 27 operates at a low speed, path portion 24 allows even faster processing than path portion 29.

Switching circuit 28 selectively inputs the input data and the input data fed back through path portions 24 and 29 to reconfigurable circuit 12, based on a switching instruction output from selector 16. Specifically, as the first to fourth setting portions 14a to 14d are selected by control portion 18, a switching instruction is issued from selector 16 at a prescribed timing based on the setting data to be set. Except for this point, the configuration is the same as that of integrated circuit device 26 shown in Fig. 1, and therefore, detailed description thereof will not be repeated.

In the following, a method of configuring (mapping) a digital demodulating circuit group as a plurality of circuits on the reconfigurable circuit will be described.

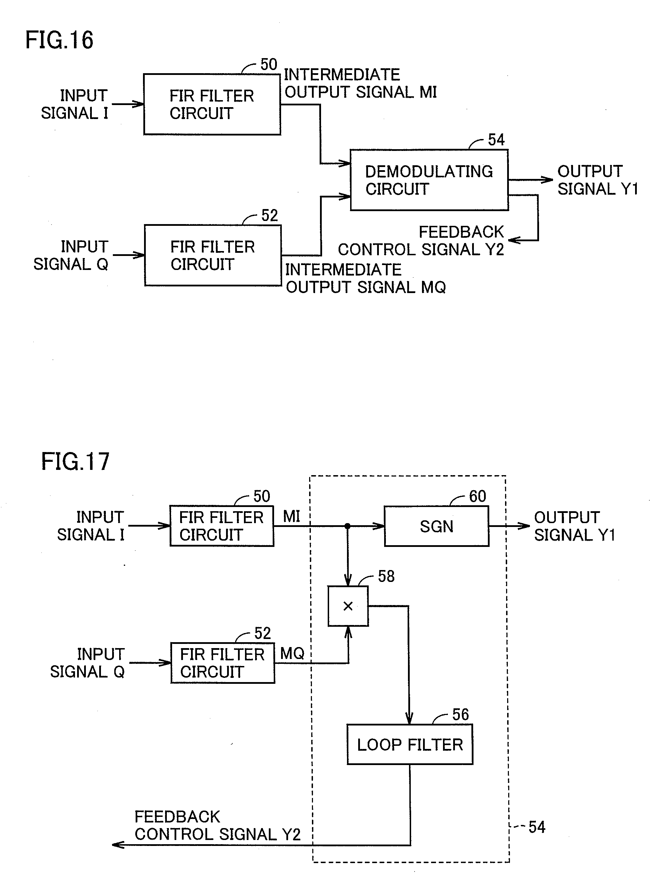

Fig. 16 shows a configuration of the digital demodulating circuit group to be formed by using the reconfigurable circuit in accordance with Embodiment 3 of the present invention.

Referring to Fig. 16, the digital demodulating circuit group includes an FIR filter circuit 50, an FIR filter circuit 52, and a demodulating circuit 54. FIR filter circuit 50 receives an input signal I and outputs an intermediate output signal MI. FIR filter circuit 52 receives an input signal Q and outputs an intermediate output signal MQ. Demodulating circuit 54 receives intermediate output signals MI and MQ, demodulates the same, and outputs a feedback control output signal Y2 and an output signal Y1.

Fig. 17 is an illustration showing the configuration of demodulating circuit 54.

Referring to Fig. 17, demodulating circuit 54 consists of a loop filter 56, a multiplier 58, and a positive/negative determining circuit (SGN) 60. Positive/negative determining circuit 60 receives the input intermediate output signal MI, and based on the result of determination, outputs a demodulation output signal Y1. Multiplier 58 receives input intermediate output signals MI and MQ, and outputs the result of multiplication to loop filter 56. Loop filter 56 receives an output signal from multiplier 58 and outputs a feedback control output signal Y2. Though not shown, feedback control signal Y2 is a control signal input as a feedback to other circuit used for digital demodulation.

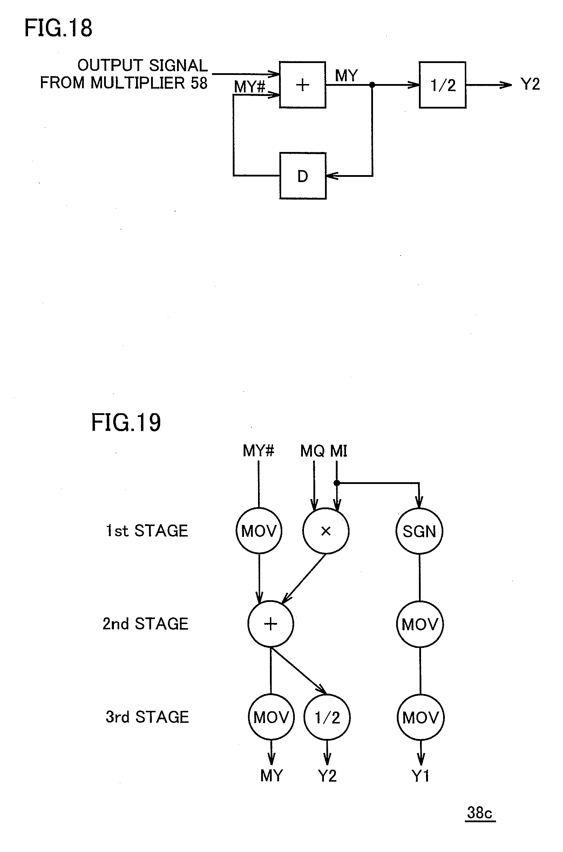

Fig. 18 shows a loop filter 56.

Referring to Fig. 18, an output signal from multiplier 58 is input to loop filter 56. It is added ("+") to a feedback signal MY#, and a signal MY is output. The signal MY is output from loop filter 56 as a feedback control output signal Y2 through a 1-bit shifter.

Fig. 19 shows data flow graph 38c formed by compiling demodulating circuit 54 shown in Fig. 17. In the figure, "x" represents a multiplication, and "SGN" represents determination of positive or negative. Other operators are the same as described above. As shown in the figure, data flow graph 38c consists of three stages of operators.

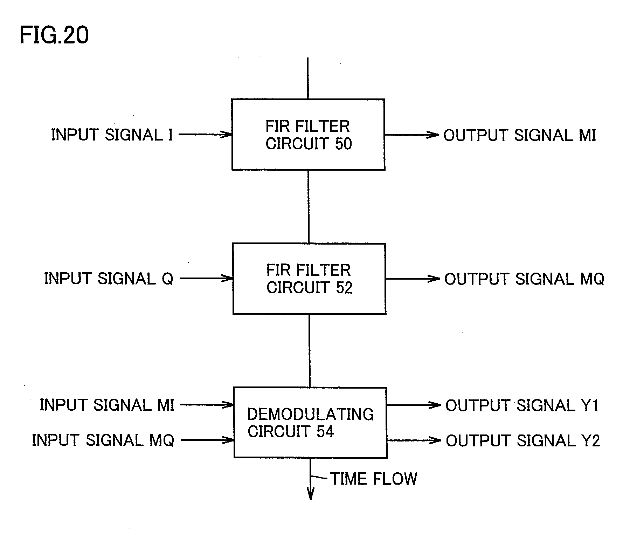

Fig. 20 shows a process flow when the digital demodulating circuit group in accordance with Embodiment 3 of the present invention is to be mapped to the reconfigurable circuit.

Referring to Fig. 20, first, FIR filter circuit 50 is mapped, and an output signal MI based on input signal I is generated. Specifically, in the similar manner as described with reference to Fig. 12, data flow graph 38a is divided into four, and FIR filter 50 is configured (mapped) on reconfigurable circuit 12 in accordance with setting data 40a to 40d output from the first to fourth setting portions 14a to 14d, respectively. As described above, the output result of each cycle is fed back as an input to the next cycle, and the output result of the last, fourth cycle, that is, the output signal MI, is stored in a prescribed area of memory portion 27.

Next, FIR filter circuit 52 is mapped, and an output signal MQ based on input signal Q is generated. Specifically, in the similar manner as for FIR filter circuit 50, data flow graph 38a is divided into four, and FIR filter circuit 52 is mapped on reconfigurable circuit 12 in the fifth to eighth cycles, in accordance with setting data 40e to 40h output from the first to fourth setting portions 14a to 14d, respectively, though not shown. Here, the output result of the last, eighth cycle, that is, output signal MQ is stored in a prescribed area of memory portion 27.

Next, demodulating circuit 54 is mapped, and output signals Y1 and Y2 based on intermediate output signals MI and MQ (input signals) are generated.

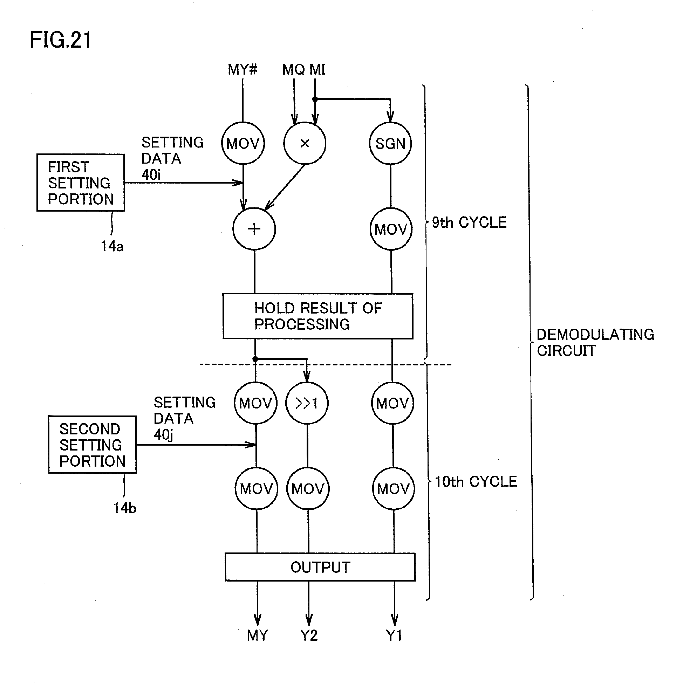

Fig. 21 shows an example in which data flow graph 38c shown in Fig. 19 is realized by using reconfigurable circuit 12 shown in Fig. 11. Data flow graph 38c consists of four stages while reconfigurable circuit 12 consists of two stages, and therefore, data flow graph 38c is divided into two.

In the ninth cycle, first setting portion 14a configures the contents of the first and second stages of data flow graph 38c on reconfigurable circuit 12, in accordance with setting data 40i. In the tenth cycle, the second setting portion 14b configures (maps) the contents of the third and fourth stages of data flow graph 38c on reconfigurable circuit 12, in accordance with setting data 40j. The output result of each cycle is fed back as an input to the next cycle. Accordingly, demodulating circuit 54 can be mapped.

In the ninth cycle, signal MY# and intermediate output signals MI and MQ stored in the prescribed areas of memory portion 27 are input through path portion 29 to reconfigurable circuit 12. As in the present embodiment, output data or the like of the circuit mapped by using reconfigurable circuit 12 is held by providing a storage area of memory portion 27, even a group of circuits executing parallel processes can also be configured by using one reconfigurable circuit 12. The signal MY# is an output signal provided after the tenth cycle when demodulating circuit 54 has been mapped last time, and it is assumed to be stored in the storage area of memory portion 27. Though an example in which FIR filter circuit 50 is mapped first and FIR filter circuit 52 is mapped thereafter has been described above, the order may be switched to attain the same result.

Specifically, by providing memory portion 27 to store output data and the like, arbitrary circuits can be mapped in an arbitrary order, using reconfigurable circuit 12.

Embodiment 3 can be realized by five types of ALUs, that is, "+", ">>1", "MOV", "×", and "SGN".

It is naturally possible that in the configurations shown in Figs. 3 and 4 described with reference to Embodiments 1 to 3 to form a so-called pipeline configuration, with a flip-flop formed between the ALU stages.

### (Embodiment 4)

In the embodiments above, examples in which reconfigurable circuit 12 consists of two stages of ALUs have been described. An example having larger number of stages, e.g., three stages, will be considered.

Here, the intended circuit 42 described with reference to Fig. 2 is assumed to be divided into four divided circuits A# to D#. Each divided circuit has information specifying operation functions of logic circuits and connecting information, in accordance with the number of stages of the ALUs. Specifically, each divided circuit is assumed to be formed by a plurality of divided units each for setting one stage of ALUs.

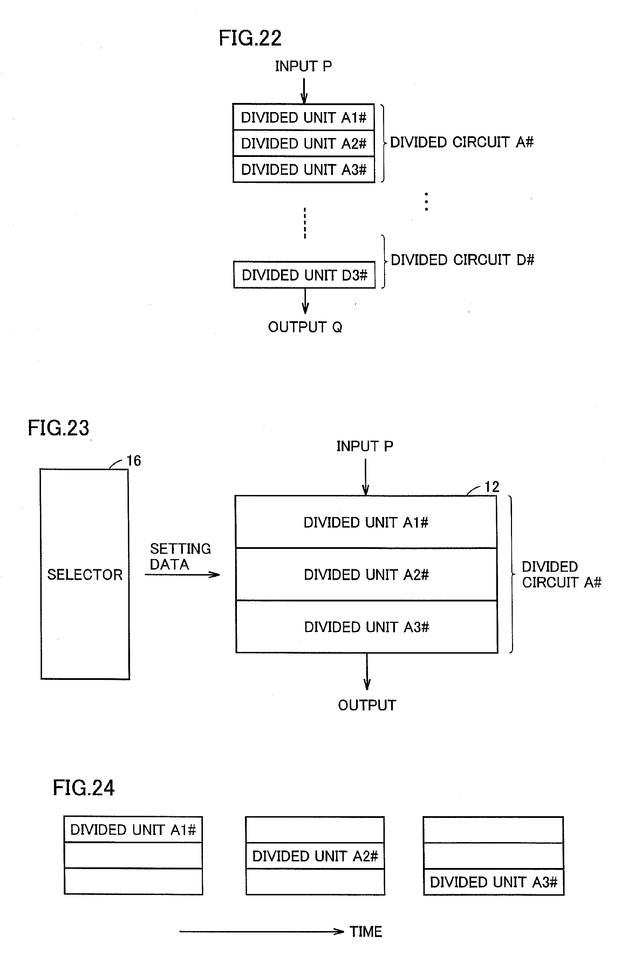

Fig. 22 is an illustration showing that divided circuits A# to D# are formed by a plurality of divided units. Here, as an example, divided circuits A# to D# are shown to have three divided units each, that is, divided units A1# to D3#.

Fig. 23 is an illustration showing an example in which divided circuit A# is configured (mapped) by selector 16 providing inputs to reconfigurable circuit 12 based on the setting data.

In this example, it is assumed that reconfigurable circuit 12 consists of three stages of ALUs, and that one divided unit is allocated to one stage of ALUs.

Assume that an intended circuit 42 is to be mapped to reconfigurable circuit 12. Specifically, when divided circuits are configured, one divided circuit includes a plurality of divided units, and a desired logic operation is executed one by one in order by the divided units.

Fig. 24 shows a process flow in divided circuit A# formed on reconfigurable circuit 12. Assuming that each logic operation in each divided unit requires one step cycle, three step cycles are necessary to form one divided unit.

In such a configuration, by way of example, in the first step cycle, a logic operation takes place in divided unit A1# and in the next step cycle, a logic operation takes place in divided unit A2# in order. In this next step, no logic operation takes place in divided unit A1#. Namely, there is a free area not used for any purpose in the circuit. Particularly when the number of ALU stages forming the reconfigurable circuit increases, the free area in the circuit increases. Therefore, effective use of the free area for other purposes is desired. In other words, execution of a so-called pipeline process is desired, in which each ALU stage operates independently.

In Embodiment 4, an optimal method for a so-called pipeline configuration will be described, in which a flip-flop circuit is provided at a connecting portion between each of the plurality of ALU stages forming the reconfigurable circuit. In the following, the reconfigurable circuit optimal for the pipeline configuration will be described.

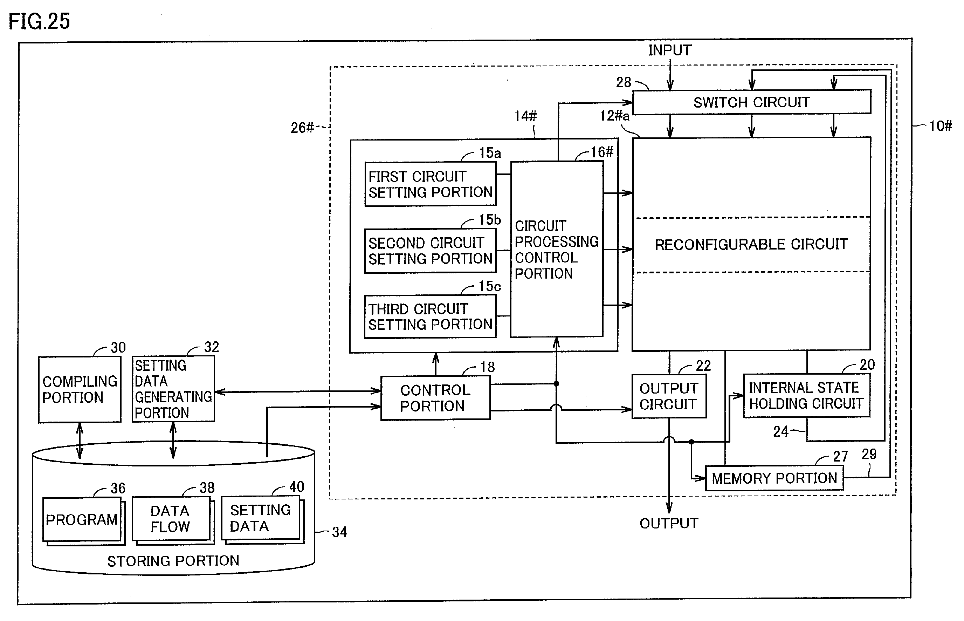

Fig. 25 shows a configuration of processing device 10# in accordance with Embodiment 4 of the present invention.

Processing device 10# in accordance with Embodiment 4 of the present invention differs from processing device 10a shown in Fig. 15 in that integrated circuit device 26a is replaced by integrated circuit device 26#. Except for this point, the device is the same as processing devices 10 and 10a described with reference to Figs. 1 and 15, and therefore, detailed description thereof will not be repeated.

Integrated circuit device 26# in accordance with Embodiment 4 of the present invention differs from integrated circuit device 26a shown in Fig. 15 in that reconfigurable circuit 12 is replaced by reconfigurable circuit 12#a and that setting portion 14 is replaced by setting portion 14#. Except for this point, the device is the same, and therefore, detailed description thereof will not be repeated. Reconfigurable circuit 12#a has a so-called pipeline configuration, and by changing setting, functions can be changed. Setting portion 14# has a first circuit setting portion 15a, a second circuit setting portion 15b, a third circuit setting portion 15c and a circuit process control portion 16, and supplies setting data 40 for forming an intended circuit in reconfigurable circuit 12#a. Circuit process control portion 16 supplies outputs from the first to third circuit setting portions 15a to 15c to reconfigurable units, which will be described later, forming stages of the pipeline of reconfigurable circuit 12#a, in a prescribed order. Further, the first to third circuit setting portions 15a to 15c are respectively provided corresponding to the reconfigurable units, which will be described later. Setting portions 14 and 14# may be formed by a memory storing setting data and the like and a so-called program counter designating a memory address, that is, an address of the memory.

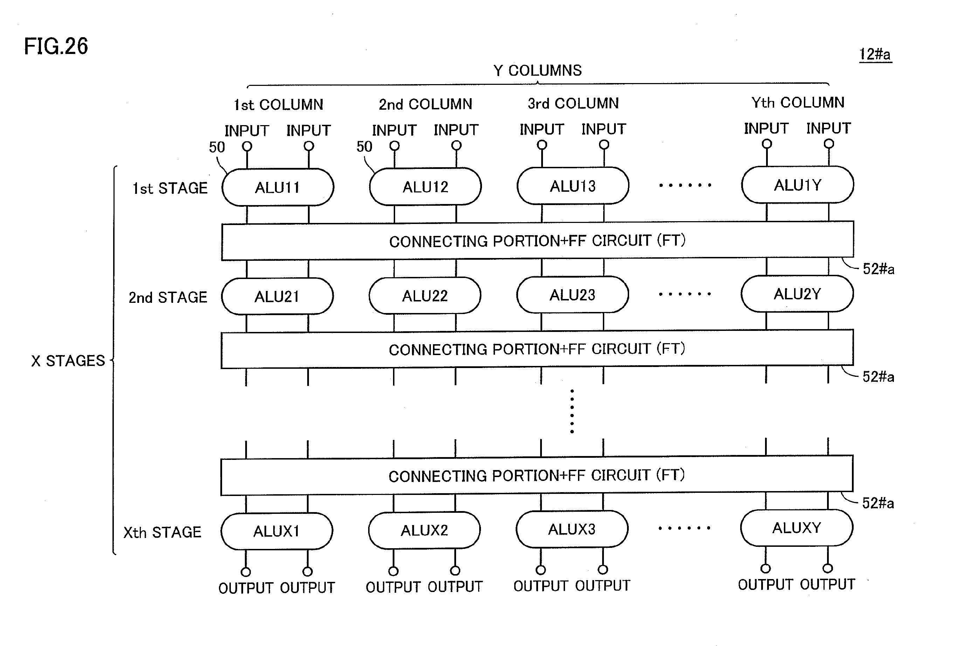

Fig. 26 shows the configuration of reconfigurable circuit 12#a.

Referring to Fig. 26, reconfigurable circuit 12#a differs from reconfigurable circuit 12 in that it additionally includes flip-flop circuits, and it performs a pipeline operation.

More specifically, reconfigurable circuit 12#a is different in that connecting portion 52 is replaced by a connecting portion + FF circuit 52#a. The connecting portion + FF circuit 52#a has a connecting portion that can set connecting relation between an output of a row of logic circuits of the preceding stage and an input to a row of logic circuits of the succeeding stage, and a state holding circuit (hereinafter also simply referred to as an FF circuit (FT)) that holds an output of a row of logic circuits of the preceding stage, that is, the internal state.

Reconfigurable circuit 12#a includes rows of a plurality of logic circuits 50 arranged in a plurality of stages, and by the connecting portion + FF circuit 52#a provided for each stage, an output of the row of logic circuits of the preceding stage and an input of the row of logic circuits of the succeeding stage may be arbitrarily connected in accordance with the setting, or connected as selected among determined combinations. Further, an output signal of the row of logic circuits of the preceding stage can be held.

As shown in the figure, reconfigurable circuit 12 is formed as an array of ALUs, having Y ALUs in the lateral direction and X ALUs in the longitudinal direction. To ALU11, ALU12, ... ALU1Y of the first stage, input variables or constants are input, and a set prescribed operation is performed. An output of the result of operation is input to ALU21, ALU22, ..., ALU2Y of the second stage, in accordance with the connection set by connecting portion + FF circuit 52 of the first stage. In the connecting portion + FF circuit 52 of the first stage, interconnections are formed such that an arbitrary connecting relation can be realized, or a selected connecting relation among determined combinations can be realized, between the output of the row of ALUs of the first stage and the input of the row of ALUs of the second stage, and a prescribed interconnection line is made effective by the setting. The arrangement is the same up to the connecting portion + FF circuit 52#a of the (X-1)th stage, and the row of ALUs of the last, Xth stage provides the final result of operation.

In the present configuration, connecting portion + FF circuit 52#a and ALUs are provided stage by stage alternately. By the arrangement of this connecting portion + FF circuit 52#a, reconfigurable circuit 12#a comes to be divided into X stages of reconfigurable units, each including a stage of ALUs. More specifically, one stage of reconfigurable unit consists of one stage of ALU row and one stage of connecting portion + FF circuit 52#a. The reconfigurable unit of the last stage may include one stage of ALU row only, or it may be combined with internal state holding circuit 20 shown in Fig. 1. The division is determined by the FF circuits, and by way of example, when connecting portion + FF circuit 52#a is provided for every two stages of ALUs and only a connecting portion without FF circuit is provided at other portions, the configuration comes to be divided into X/2 stages of reconfigurable units formed of ALUs arranged 2-stages by 2-stages. Further, by providing the FF circuit at every prescribed number of ALU stages, a reconfigurable unit having a desired number of stages can be formed.

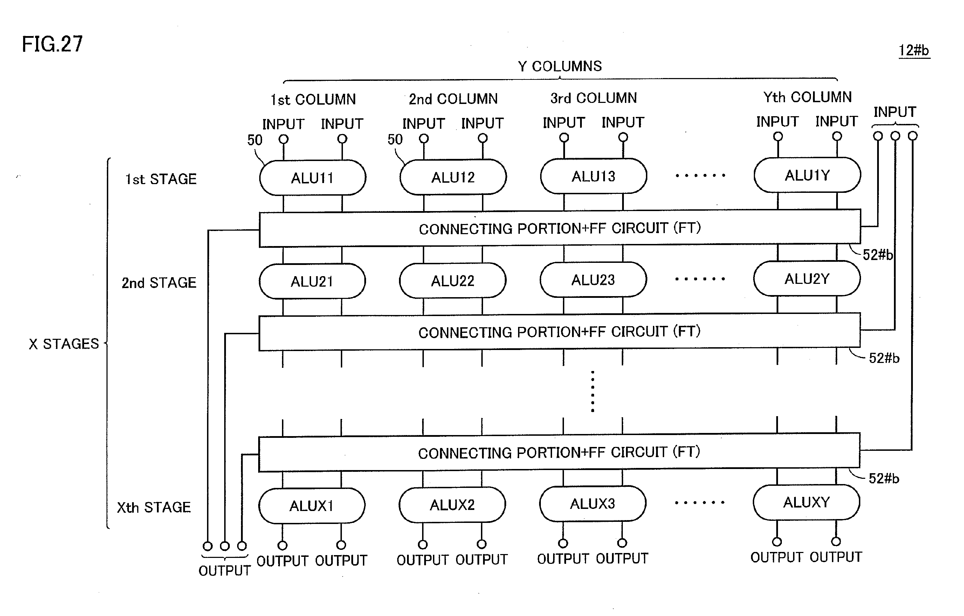

Fig. 27 shows the configuration of reconfigurable circuit 12#b that can replace reconfigurable circuit 12#a shown in Fig. 26.

Referring to Fig. 27, reconfigurable circuit 12#b differs from reconfigurable circuit 12#a in that connecting portion + FF circuit 52#a is replaced by connecting portion + FF circuit 52#b. In addition to the functions of connecting portion + FF circuit 52#a, connecting portion + FF circuit 52#b allows direct external input of variables and constants. Further, it is possible to output of the result of operation of the ALU in the preceding stage directly from connecting portion + FF circuit 52#b to the outside. This configuration allows formation of more versatile combinational circuit than reconfigurable circuit 12#a shown in Fig 26, improving degree of freedom in design. Other portions and configurations are the same as those of reconfigurable circuit 12#a shown in Fig. 26, and therefore, detailed description thereof will not be repeated.

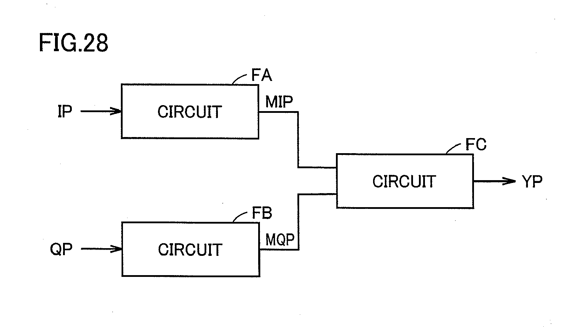

Fig. 28 shows an exemplary circuit group to be mapped to reconfigurable circuit 12#a in accordance with Embodiment 4 of the present invention.

Referring to Fig. 28, here, three circuits FA to FC are shown. Circuit FA receives an input signal IP and provides an output signal MIP. Circuit FB receives an input signal QP and provides an output signal MQP. Circuit FC receives input signals MIP and MQP and provides an output signal YP. Setting data of these circuits FA to FC are stored in the first to third circuit setting portions 15a to 15c.

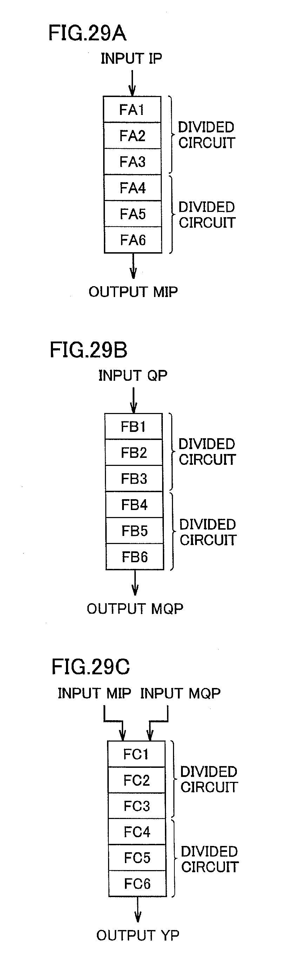

Figs. 29A to 29C illustrate divided units divided for mapping circuits FA, FB and FC to each of the reconfigurable units of reconfigurable circuit 12#a. In this example, it is assumed that reconfigurable circuit 12#a is set to have a configuration of three stages of reconfigurable units each having one stage of ALUs.

Fig. 29A is an illustration of the divided unit for circuit FA. Referring to Fig. 29A, here, in conformity to the configuration of reconfigurable circuit 12#a, circuit FA is divided into two divided circuits, and further divided into divided units FA1 to FA6. Fig. 29B is an illustration of divided units for dividing circuit FB. Similar to the above, circuit FB is divided into two divided circuits, and further divided into divided units FB1 to FB6. Fig. 29C is an illustration of divided units for dividing circuit FC. Similar to the above, circuit FC is divided into two divided circuits, and further divided into divided units FC1 to FC6.

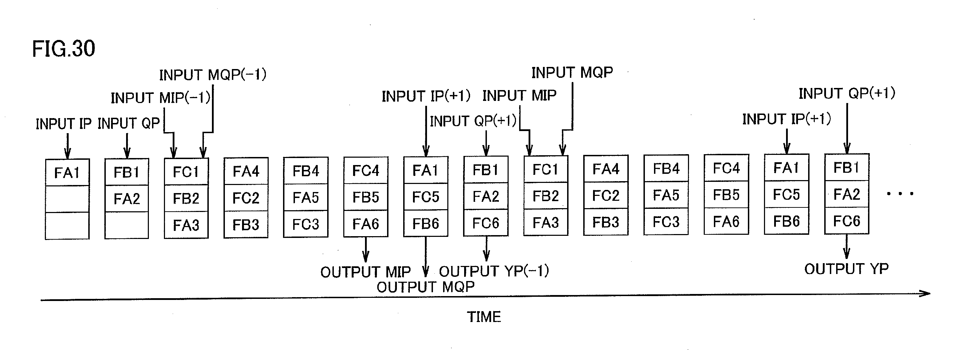

Fig. 30 is an illustration showing how the circuits FA to FC are mapped to reconfigurable circuit 12#a in accordance with the present embodiment.

Referring to Fig. 30, in the first step cycle (1st step cycle), divided unit FA1 is mapped to the first stage, and the input signal IP is input. A logic operation is executed in divided unit FA1, and thereafter, the result of logic operation is held by the connecting portion + FF circuit 52#a described above. In the next step cycle (2nd step cycle), divided unit FA2 is mapped to the second stage, and divided unit FB1 receiving the input signal QP is mapped to the first stage. Accordingly, in the first stage, the logic operation of divided unit FB1 is executed, and the result of logic operation is held by the connecting portion + FF circuit 52 described above. In the second stage, receiving the input of the result of logic operation that has been held by the preceding stage, divided unit FA2 executes a prescribed logic operation, and the result of logic operation is held by the connecting portion + FF circuit 52. In the next step cycle (3rd step cycle), divided unit FA3 is mapped to the third stage, divided unit FB2 is mapped to the second stage, and divided unit FC1 receiving input signal MIP(-1) and input signal MQP(-1) is mapped to the first stage. Accordingly, in the third stage, a logic operation of divided unit FC1 is executed, and the result is output from reconfigurable circuit 12#a. The output result is held by internal state holding circuit 20, and transmitted to the input side of reconfigurable circuit 12#a through path portion 24. Specifically, the signal transmitted to switching circuit 28 through path portion 24 is input to reconfigurable circuit 12#a in response to an instruction from circuit processing control portion 16. In the next step cycle (4th step cycle), divided unit FA4 is mapped to the first stage, divided unit FC2 is mapped to the second stage, and divided unit FB3 is mapped to the third stage. Thereafter, in the similar manner, divided units FA1 to FA6, FB1 to FB6 and FC1 to FC6 are mapped successively in order, to the ALUs of the first to third stages of reconfigurable circuit 12#a, in accordance with the flow of signal processing of respective circuits FA to FC.

Consequently, by mapping in the 6th step cycle, the output signal MIP is output from the divided unit FA6 formed by the ALUs in the third stage. By mapping in the 7th step cycle, the output signal MQP is output from divided unit FB6 of the third stage. Further, by mapping in the 8th step cycle, the output signal YP(-1) is output from divided unit FC6 of the third stage.

In this manner, it becomes possible to allocate divided units of different circuits to prescribed areas of reconfigurable circuit 12#a respectively in one step cycle, and when one circuitry is formed as a whole, high speed logic operation can be realized. By way of example, when circuit FA is mapped to generate the output signal MIP based on input signal IP, circuit FB is mapped thereafter to generate the output signal MQP based on input signal QP and finally, circuit FC is mapped to generate the output signal YP based on input signals MIP and MQP, it takes 18 step cycles to provide the output signal YP. When the present approach is taken, the output signal YP can be output after 14 step cycles.

By mapping different circuits to various stages of reconfigurable circuit 12#a and thereby executing a plurality of operations in parallel, it becomes possible, through high speed mapping, to realize high-speed logic operation.

Particularly, as the reconfigurable units are used without any waste, high speed processing is possible, and as a result, the size and power consumption of the circuit can be reduced.

Further, when one circuit is mapped, processing is done continuously without any interruption, and therefore, a special memory or the like to successively store data is unnecessary. This also contributes to reduction in size and power consumption of the circuit. Further, the configuration is suitable for multi-task processing, as it allows simultaneous mapping of a plurality of circuits. Further, the configuration is also suitable for mapping a data flow graph, and it facilitates development of a mapping software.

In this example, notations (-1) and (+1) represent signals preceding by one and succeeding by one the present signal. It is assumed that input signals MIP(-1) and MQP(-1) are stored in memory portion 27. These signals stored in memory portion 27 are applied to switching circuit 28 through path portion 29, and input to reconfigurable circuit 12#a in response to an instruction from control portion 18.

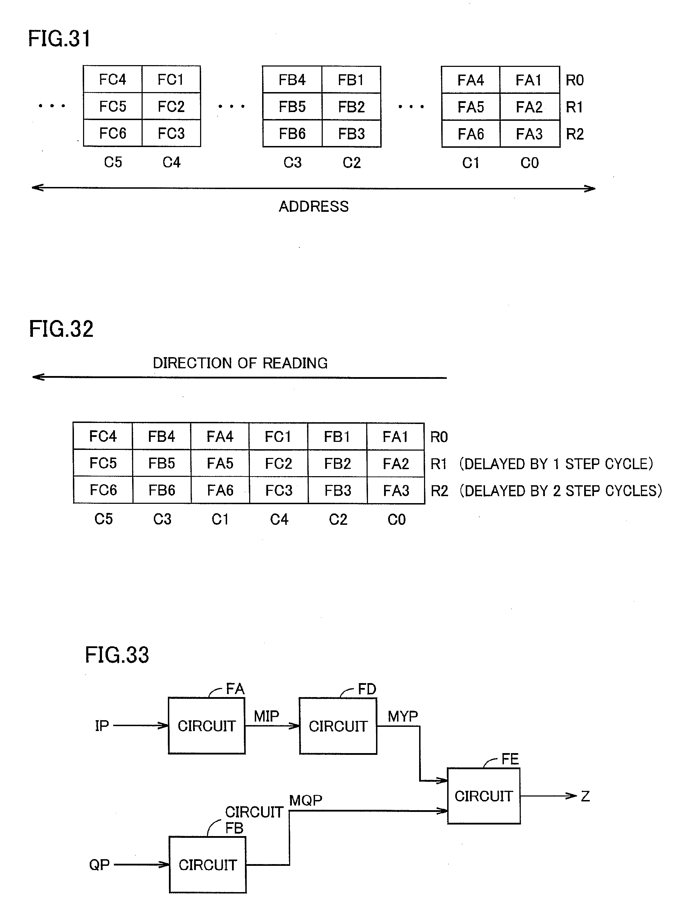

Fig. 31 is an illustration showing a storage area in which a plurality of setting data of divided units are stored, in storing portion 34.

Referring to Fig. 31, column addresses C0 to C5 correspond to the lateral direction, and row addresses R0 to R2 correspond to the longitudinal direction. In the present example, it is assumed that an address (R0, C0) indicates the setting data of divided unit FA1. An address (R2, C5) indicates setting data of divided unit FC6.

Fig. 32 is an illustration showing a method of transmitting setting data from the setting data 40 of storing portion 34 to the first circuit setting portion 15a, second circuit setting portion 15b and third circuit setting portion 15c by address designation.

Referring to Fig. 32, control portion 18 reads row address R0 and column addresses C0, C2, C4, C1, C3 and C5 in this order and provides outputs to the first circuit setting portion 15a for mapping to the reconfigurable units of the first stage. Further, control portion 18 reads, after a delay of one step cycle, row address R1 and column addresses C0, C2, C4, C1, C3 and C5 in this order and provides outputs to the second circuit setting portion 15b for mapping to the reconfigurable units of the second stage. Further, control unit 18 reads, after a delay of two step cycles, row address R2 and column addresses C0, C2, C4, C1, C3 and C5 in this order, and provides outputs to the third circuit setting portion 15c for mapping to the reconfigurable units of the third stage. Further, control unit 18 controls timings of driving output circuit 22, storage of data signal to memory portion 27 and control portion 14, based on control data applied together with the input of setting data 40.

Consequently, a mapping operation is performed on reconfigurable circuit 12#a in the order shown in Fig. 30, and thus, prescribed high-speed circuit configuration realizing both high speed mapping operation and high speed logic operation can be implemented.

Fig. 33 shows another exemplary group of circuits to be mapped to reconfigurable circuit 12#a in accordance with the present embodiment.

Referring to Fig. 33, here, four circuits FA, FB, FD and FE are shown. Circuit FA receives the input signal IP and provides the output signal MIP. Circuit FB receives the input signal QP and provides the output signal MQP. Circuit FD receives the input signal MIP and provides the output signal MYP. Circuit FE receives input signals MYP and MQP and provides the output signal Z.

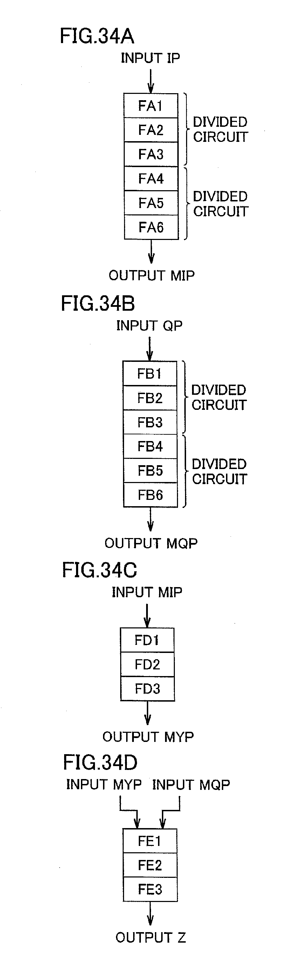

Figs. 34A to 34D are illustrations showing divided units divided for mapping the circuits FA, FB, FD and FE to each of the reconfigurable units of reconfigurable circuit 12#a. In this example, it is assumed that reconfigurable circuit 12#a is set to have three stages of reconfigurable units each having one stage of ALUs.

Fig. 34A is an illustration showing divided units divided for mapping a circuit FA. Referring to Fig. 34A, circuit FA is divided into two divided circuits in conformity to the configuration of reconfigurable circuit 12#a, and further divided into divided units FA1 to FA6. Fig. 34B is an illustration showing divided units divided for mapping a circuit FB. In the similar manner, circuit FB is divided into two divided circuits, and further divided into divided units FB1 to FB6. Fig. 34C is an illustration showing divided units divided for mapping a circuit FD. In the similar manner, circuit FD is divided into three divided units FD1 to FD3. Fig. 34D is an illustration showing divided units divided for mapping a circuit FE. In the similar manner, circuit FE is divided into three divided units FE1 to FE3.

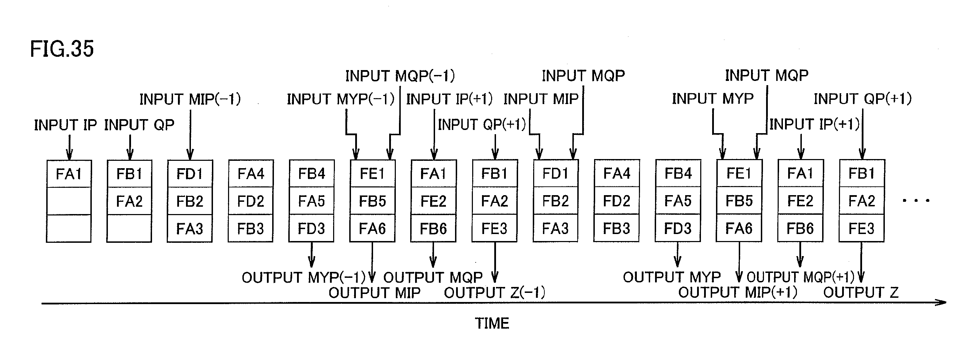

Fig. 35 is an illustration showing a method of mapping circuits FA, FB, FC and FD to reconfigurable circuit 12#a in accordance with Embodiment 4 of the present invention.

Referring to Fig. 35, in the first step cycle (1st step cycle), divided unit FA1 is mapped to the first stage, and the input signal IP is input. In the next step cycle (2nd step cycle), divided unit FA2 is mapped to the second stage, and divided unit FB1 receiving the input signal QP is mapped to the first stage. In the next step cycle (3rd step cycle), divided unit FA3 is mapped to the third stage, divided unit FB2 is mapped to the second stage, and divided unit FD 1 receiving input signal MIP(-1) is mapped to the first stage. In the next step cycle (4th step cycle), divided unit FA4 is mapped to the first stage, divided unit FD2 is mapped to the second stage, and divided unit FB3 is mapped to the third stage. In the next cycle (5th step cycle), divided unit FB4 is mapped to the first stage, divided unit FA5 is mapped to the second stage, and divided unit FD3 is mapped to the third stage. In the next step cycle (6th step cycle), divided unit FE1 is mapped to the first stage, divided unit FB5 is mapped to the second stage, and divided unit FA6 is mapped to the third stage. Thereafter, in the similar manner, divided units are mapped successively in order, to the ALUs of the first to third stages of reconfigurable circuit 12#a, in accordance with the flow of signal processing of respective circuits FA, FB, FD and FE.

Consequently, by mapping in the 6th step cycle, the output signal MIP is output from the divided unit FA6 formed by the ALUs in the third stage. By mapping in the 7th step cycle, the output signal MQP is output from divided unit FB6 of the third stage. Further, by mapping in the 8th step cycle, the output signal Z(-1) is output from divided unit FE3 of the third stage.

Here, mapping is performed regarding circuits FD and FE as one same circuit.

In this manner, it becomes possible to allocate divided units of different circuits to prescribed areas of reconfigurable circuit 12#a respectively in one step cycle, and when one circuitry is formed as a whole, high speed logic operation can be realized.

By mapping different circuits to various stages of reconfigurable circuit 12#a and thereby executing a plurality of operations in parallel, it becomes possible, through high speed mapping, to realize high-speed logic operation. In this example, notations (-1) and (+1) represent signals preceding by one and succeeding by one the present signal. It is assumed that input signals MIP(-1) and MQP(-1) are stored in memory portion 27.

The divided units obtained by dividing the circuits of digital modulating circuit group shown in Fig. 16 will be described.

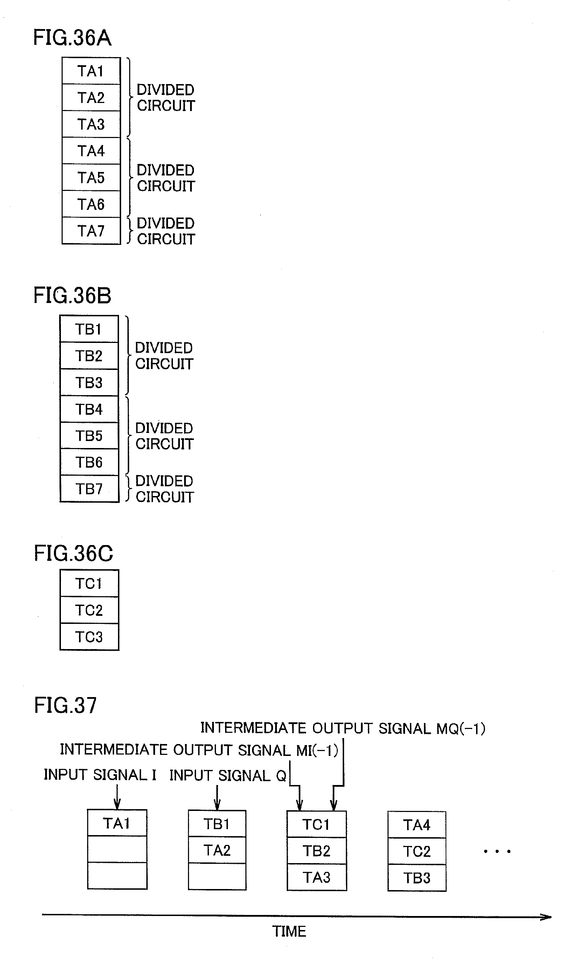

Fig. 36A illustrates divided units obtained by dividing an FIR filter 50. Specifically, this figure shows divided units TA1 to TA7 obtained by dividing, stage by stage, the data flow graph 38a consisting of seven stages of operators shown in Fig. 10. Fig. 36B illustrates divided units obtained by dividing an FIR filter 52. Similar to Fig. 36a, this figure shows divided units TB1 to TBA7 obtained by dividing, stage by stage, FIR filter 52. Fig. 36C illustrates divided units obtained by dividing demodulating circuit 54. Specifically, this figure shows divided units TC1 to TC3 obtained by dividing, stage by stage, the data flow graph 38c consisting of three stages of operators shown in Fig. 19. Though FIR filters 50 and 52 having divided units formed based on seven stages of operators of data flow graph 38a are described, it is possible to divide into divided units of one stage each, using data flow graph 38b consisting of four stages of operators shown in Fig. 13.

Fig. 37 is an illustration showing mapping of a digital demodulating circuit group to reconfigurable circuit 12#a in accordance with the same method as shown in Fig. 30. In this example, it is assumed that reconfigurable circuit 12#a is set to have three stages of reconfigurable units, each having one stage of ALUs.

Referring to Fig. 37, in the first step cycle (1st step cycle), divided unit TA1 is mapped to the first stage, and the input signal IP is input. In the next step cycle (2nd step cycle), divided unit TA2 is mapped to the second stage, and divided unit TB I receiving the input signal QP is mapped to the first stage. In the next step cycle (3rd step cycle), divided unit TA3 is mapped to the third stage, divided unit TB2 is mapped to the second stage, and divided unit TC1 receiving input signals MIP and MQP is mapped to the first stage. In the next step cycle (4th step cycle), divided unit TA4 is mapped to the first stage, divided unit TC2 is mapped to the second stage, and divided unit TB3 is mapped to the third stage. Thereafter, in the similar manner, FIR circuits 50 and 52 as well as demodulating circuit 54 are mapped respectively, using the ALUs of the first to third stages of reconfigurable circuit 12#a, in accordance with the flow of signal processing.

In this manner, it becomes possible to allocate divided units of different circuits to prescribed areas of reconfigurable circuit 12#a respectively in one step cycle, and when one circuitry is formed as a whole, high speed logic operation can be realized.

The method in accordance with the fourth embodiment described above may be naturally applied to the configurations in accordance with the first to third embodiments.

Though a configuration in which an FF circuit is inserted to every stage of ALUs has been described, the method is naturally applicable to arrangements in which the FF circuit is inserted to every prescribed number of ALU stages, for example where the FF circuit is inserted at every two stages.

Though the present invention has been described with reference to the embodiments, these are examples only. A person skilled in the art naturally understands that various modifications may be made to various components and process combinations, and that such modifications also fall within the scope of the present invention.

For instance, the ALU arrangement in reconfigurable circuit 12#a is not limited to multi-stage arrangement connected in longitudinal direction only, and a mesh type arrangement allowing connection in lateral direction may be used. Further, though lines skipping a stage for connecting logic circuits are not provided in the examples described above, such connection lines skipping stages may be provided.

Although the present invention has been described and illustrated in detail, it is clearly understood that the same is by way of illustration and example only and is not to be taken by way of limitation, the spirit and scope of the present invention being limited only by the terms of the appended claims.

### Industrial Applicability

The processing device in accordance with the present invention is applicable to mobile terminals including portable telephones and PDAs (Portable Data Assistants) as well as to broadcast receivers.

## Claims

1. A processing device, comprising:
a reconfigurable circuit (12) allowing change in function;
a first path portion (24) transmitting an output of said reconfigurable circuit (12) as an input to said reconfigurable circuit (12);
a setting portion (14) supplying setting data (40) for configuring an intended circuit in said reconfigurable circuit (12); and
a control portion (18) controlling said setting portion (14) such that a plurality of setting data are successively supplied to said reconfigurable circuit (12), so that an output of a circuit configured on said reconfigurable circuit (12) in accordance with one setting data is supplied to an input of a circuit configured in accordance with next setting data through said first path portion (24).

2. The processing device according to claim 1, wherein
said setting portion (14) successively supplies a plurality of setting data to said reconfigurable circuit (12), so that one circuit is formed as a whole.

3. The processing device according to claim 1, wherein
said plurality of setting data (40a ~ 40d) represent a plurality of divided circuits (A~D) obtained by dividing one circuit (42).

4. The processing device according to claim 1, wherein
said reconfigurable circuit is configured as a combinational circuit (50, 52).

5. The processing device according to claim 1, further comprising
an output circuit (22) receiving an output of said reconfigurable circuit (12),
said output circuit (22) providing the output of said reconfigurable circuit (12) when said reconfigurable circuit (12) is configured a plurality of times by said setting portion (14).

6. The processing device according to claim 1, further comprising
an internal state holding circuit (20) receiving an output of said reconfigurable circuit (12),
said internal state holding circuit (20) being connected to said first path portion (24).

7. The processing circuit according to claim 6, further comprising:
a memory portion (27) storing in a prescribed area an output of a circuit configured on said reconfigurable circuit (12) in accordance with said one setting data; and
a second path portion (29) transmitting the output of the circuit configured on said reconfigurable circuit (12) stored in said prescribed area of said memory portion (27) as an input to a circuit configured in accordance with the next setting data.

8. The processing circuit according to claim 7, further comprising
a switching circuit (28) switching between the input from said second path portion (29) and an external input, to be an input to said reconfigurable circuit (12).

9. The processing device according to claim 1, wherein
said reconfigurable circuit (12) includes a plurality of logic circuits (50) each capable of selectively executing a plurality of operation functions, and a connecting portion (52) allowing setting of connection relation among the logic circuits; and
said setting portion (14) sets the functions and said connection relation of said logic circuits (50).

10. The processing device according to claim 9, wherein
said logic circuit (50) is an arithmetic logic circuit (ALU) capable of selectively executing a plurality of multi-bit operations.

11. A processing method, comprising the steps of: configuring a plurality of divided circuits (A~D) obtained by dividing one circuit (42) on a reconfigurable circuit (12); feeding back an output of one divided circuit to an input of a next divided circuit to execute an operation in the divided circuits; and taking out an output from the last configured divided circuit.

12. An integrated circuit device, comprising:
a reconfigurable circuit (12) allowing change in function;
a path portion (24) connecting an output of said reconfigurable circuit (12) to an input of said reconfigurable circuit (12); and
a setting portion (14) supplying setting data for configuring an intended circuit on said reconfigurable circuit (12).

13. A processing device, comprising:
a reconfigurable circuit (12#a) allowing change in function and connection relation;
a setting portion (14#) storing setting data representing a divided unit forming a part of an intended circuit and supplying the setting data to said reconfigurable circuit (12#a); and
a control portion (18) controlling said setting portion (14#) such that a plurality of setting data are successively supplied to said reconfigurable circuit (12#a) to configure said intended circuit; wherein
said reconfigurable circuit (12#a) has at least one state holding circuit (52#a) holding an internal state;
said reconfigurable circuit (12#a) is divided, by an arrangement of said state holding circuit (FT), into a plurality of stages of reconfigurable units; and
said control portion (18) controls said setting portion (14#) such that when a plurality of intended circuits are to be configured, setting data for configuring divided units each forming a part of the circuits on respective ones of said plurality of stages of reconfigurable units are successively supplied along a process flow.

14. The processing device according to claim 13, wherein
said reconfigurable circuit is divided, by an arrangement of N state holding circuit (FT), into (N+1) stages of reconfigurable units;
said control portion (18) controls said setting portion (14#) such that at one time point, setting data of a divided unit configuring an intended circuit is supplied to said reconfigurable unit between i-th state holding circuit and (i+1)th state holding circuit,
controls said setting portion (14#) such that at a next time point, setting data of a next divided unit configuring said intended circuit is supplied to said reconfigurable unit between (i+1)th state holding circuit and (i+2)th state holding circuit in accordance with the process flow, and controls said setting portion (14#) such that setting data of a divided unit configuring a different intended circuit is supplied to said reconfigurable unit between i-th state holding circuit and (i+1)th state holding circuit (52#a).

15. The processing device according to claim 13, wherein
said reconfigurable circuit (12#a) is divided, by the arrangement of N state holding circuits (FT), into N stages of reconfigurable units;
said control portion (18) controls said setting portion (14#) such that at one time point, setting data of a divided unit configuring an intended circuit is supplied to said reconfigurable unit between i-th state holding portion and (i+1)th state holding portion,
controls said setting portion (14#) such that at a next time point, setting data of a next divided unit configuring said intended circuit is supplied to said reconfigurable unit between (i+1)th state holding portion and (i+2)th state holding portion in accordance with the process flow, and controls said setting portion (14#) such that setting data of a divided unit configuring a different intended circuit is supplied to said reconfigurable unit between i-th state holding circuit and (i+1)th state holding circuit;
said device further comprising
a path portion (24) for providing an input from the N-th state holding portion to the first stage of reconfigurable units.

16. The processing device according to claim 13, wherein said reconfigurable unit is configured as a combinational circuit (50, 52#a).

17. The processing device according to claim 13, further comprising
an output circuit (22) receiving an output of said reconfigurable circuit (12#a),
said output circuit (22) providing the output of said reconfigurable circuit (12#a) when said reconfigurable circuit (12#a) is configured a plurality of times by said setting portion (14#).

18. The processing circuit according to claim 13, further comprising:
an internal state holding circuit (20) receiving an output of said reconfigurable circuit (12#a); and
a first path portion (24) inputting the output signal held by said internal state holding circuit (20) to the first stage of reconfigurable units.

19. The processing device according to claim 18, further comprising:
a memory portion (27) storing in a prescribed area an output of said reconfigurable circuit (12#a) in accordance with a setting data; and
a second path portion (29) transmitting the output of the circuit configured on said reconfigurable circuit (12#a) stored in said prescribed area of said memory portion (27) as an input to a circuit configured in accordance with the next setting data.

20. The processing circuit according to claim 19, further comprising
a switching circuit (28) switching between the input from said second path portion (29) and an external input, to be an input to said reconfigurable circuit (12#a).

21. The processing device according to claim 13, wherein
said reconfigurable unit includes a plurality of logic circuits (50) each capable of selectively executing a plurality of operation functions, and a connecting portion (52#a) allowing setting of connection relation among the logic circuits; and
said setting portion (14#) sets the functions and said connection relation of said logic circuits (50).

22. The processing device according to claim 21, wherein
said logic circuit (50) is an arithmetic logic circuit (ALU) capable of selectively executing a plurality of multi-bit operations.
